(19) Europäisches Patentamt
European Patent Office
Office européen des brevets

(11) **EP 2 603 466 B1**

(12) **FASCICULE DE BREVET EUROPEEN**

(45) Date de publication et mention de la délivrance du brevet:
**12.09.2018 Bulletin 2018/37**

(21) Numéro de dépôt: **11746658.1**

(22) Date de dépôt: **22.07.2011**

(51) Int Cl.:
*C04B 35/626* (2006.01)   *C04B 35/106* (2006.01)
*C04B 35/105* (2006.01)   *C04B 35/12* (2006.01)
*C03B 5/43* (2006.01)

(86) Numéro de dépôt international:
**PCT/IB2011/053287**

(87) Numéro de publication internationale:
**WO 2012/020345 (16.02.2012 Gazette 2012/07)**

(54) **POUDRE A BASE D'OXYDE DE CHROME**

PULVER AUF DER BASIS VON CHROMOXYD

POWDER ON THE BASIS OF CHROMIC OXIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.08.2010 FR 1056541**
**10.08.2010 FR 1056540**

(43) Date de publication de la demande:
**19.06.2013 Bulletin 2013/25**

(73) Titulaire: **Saint-Gobain Centre De Recherches Et D'etudes Europeen**
**92400 Courbevoie (FR)**

(72) Inventeurs:
• **LINNOT, Cyril**
**F-69007 Lyon (FR)**
• **MOITRIER, Lionel**
**F-13370 Mallemort (FR)**
• **BOUSSANT ROUX, Yves, Marcel, Léon**
**F-84140 Montfavet (FR)**
• **CITTI, Olivier**
**Wellesley**
**MA 02482 (US)**
• **AVEDIKIAN, Richard**
**F-84440 Robion (FR)**

(74) Mandataire: **Nony**
**11 rue Saint-Georges**
**75009 Paris (FR)**

(56) Documents cités:
FR-A1- 2 647 435   US-A- 4 039 344
US-A- 4 158 569   US-A- 4 544 643
US-B1- 6 352 951

• GUO Z-Q ET AL: "Effect of Coal Slag on the Wear Rate and Microstructure of the ZrO2-Bearing Chromia Refractories", CERAMICS INTERNATIONAL, ELSEVIER, AMSTERDAM, NL, vol. 23, no. 6, 1 janvier 1997 (1997-01-01), pages 489-496, XP004097437, ISSN: 0272-8842, DOI: 10.1016/S0272-8842(96)00059-4
• KRAUTH A ET AL: "Some Experience with Chromic-Oxide Materials", GLASS (REDHILL), FUEL AND METALLURGICAL JOURNALS, REDHILL, GB, vol. 65, no. 2, 1 février 1988 (1988-02-01), pages 76-78, XP009110914, ISSN: 0017-0984
• GUO ZONQI ET AL: "Investigation and Application of Cr2O3-Al2O3-ZrO2 Refractories for Slagging Coal Gasifiers-", CHINA'S REFRACTORIES, EDITORIAL COMMITTEE OF CHINA'S REFRACTORIES, LUOYANG, CN, vol. 6, no. 4, 1 janvier 1997 (1997-01-01) , pages 18-22, XP009056408, ISSN: 1004-4493
• O. N. POPOV: "Refractory Materials for Glass-Furnace tanks", STATE SCIENTIFIC RESEARCH INSTITUT FOR GLASS (USSR), 12 janvier 1973 (1973-01-12), pages 15-17, XP002630976, NY (US) DOI: UDC 666.1.031:22.666.76

**Description**

**Domaine technique**

L'invention se rapporte à une poudre comportant de l'oxyde de chrome, à un mélange particulaire fabriqué à partir d'une telle poudre, à un produit fritté fabriqué à partir d'un tel mélange particulaire et à un dispositif comportant ledit produit fritté. Ce produit réfractaire peut être en particulier utilisé dans un environnement dans lequel il est en contact avec du verre en fusion.

**Etat de la technique**

Parmi les produits réfractaires, on distingue les produits fondus et coulés et les produits frittés. A la différence des produits frittés, les produits fondus et coulés comportent le plus souvent une phase vitreuse intergranulaire très abondante qui vient remplir le réseau des grains cristallisés.

Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas *a priori* utilisable telle quelle pour fabriquer un produit fritté, et réciproquement.

Les produits frittés sont obtenus par mélange de matières premières appropriées puis mise en forme à cru de ce mélange et cuisson de la pièce crue résultante à une température et pendant un temps suffisants pour obtenir le frittage de cette pièce crue. Les produits frittés, selon leur composition chimique, sont destinés à des industries très variées.

Des produits réfractaires comportant de l'oxyde de chrome sont classiquement utilisés dans des applications où ils sont soumis à une agression chimique extrême, par exemple dans des fours de verrerie, en particulier comme blocs de cuve de four, ou dans des fours dans lesquels ils sont au contact d'un laitier, ou dans des installations d'incinération de déchets.

Dans ces applications, les sollicitations mécaniques et thermiques peuvent également être sévères. Les cyclages thermiques (montées et descentes en température répétées) peuvent en particulier générer des fissures qui vont diminuer la résistance mécanique des produits réfractaires. Ces fissures peuvent également être un chemin privilégié pour les agents agressifs.

L'utilisation de tels produits réfractaires au contact avec un laitier ou avec un verre en fusion est par exemple connue de US 6,352,951 (fours d'incinération contenant des blocs à base d'alumine et de chrome) et de US 4,823,359 (fours de verrerie présentant des revêtements constitués d'alumine et de chrome).

La corrosion par un laitier est différente de la corrosion par un verre en fusion et un produit convenant pour être mis en contact avec un laitier ne convient donc pas forcément pour une application dans laquelle il serait mis en contact avec du verre en fusion.

L'article de Z.-Q. Guo et al., Ceramic International, vol. 23, pages 489 à 496 (1997) décrit l'effet du laitier de charbon sur la résistance à l'usure et la microstructure de réfractaires de chrome comportant $ZrO_2$.

US 4,544,643 décrit une composition réfractaire résistante aux scories siliceuses et comportant, en masse, entre 45 et 85 % d'oxyde de chrome et entre 15 et 55 % d'alumine, la composition ayant une fraction de gros grains et une fraction de grains fins comportant entre 40 et 100 % en masse d'oxyde de chrome.

US 4,158,569 décrit un produit fondu dense en un matériau dont la microstructure consiste essentiellement en au moins 70 % en volume d'une phase cristalline de solution solide de corindon contenant de l'oxyde de chrome, au moins environ 5 % en volume de phases cristallines secondaires d'oxydes comprenant principalement une solution solide d'hexa-aluminate de métal alcalino-terreux contenant de l'oxyde de chrome, et moins de 10 % d'une phase métallique.

US 4,039,344 décrit une composition réfractaire d'alumine et de chrome comprenant entre 30 et 60 % en masse d'un matériau de type alumine-silice contenant 50 à 95 % en masse d'alumine majoritairement sous forme de particules grossières, et entre 40 et 70 % en masse d'un matériau de type chrome majoritairement sous forme de particules fines.

Ces documents ne décrivent pas une poudre présentant une circularité médiane supérieure à 0,87, ni ne décrit qu'au moins 90 % des particules présentent une taille supérieure à 100 $\mu$m.

Il existe un besoin permanent pour de nouveaux produits réfractaires à base d'oxyde de chrome présentant une bonne résistance aux chocs thermiques et une résistance à la corrosion élevée, notamment dans une application dans laquelle ces produits sont mis en contact avec du verre en fusion.

Un but de l'invention est de satisfaire ce besoin.

**Résumé de l'invention**

L'invention propose une poudre de particules, ladite poudre présentant une circularité médiane supérieure à 0,87 et au moins 90% en masse de particules présentant une taille supérieure à 100 $\mu$m, la poudre et au moins 80% en masse des particules présentant une composition chimique telle que, en pourcentage massique sur la base des oxydes et pour un total de 100% :

-   $Cr_2O_3 + Al_2O_3 + ZrO_2 + MgO + Fe_2O_3 + SiO_2 + TiO_2 \geq 90\%$, et
-   $Cr_2O_3 + Al_2O_3 + MgO \geq 60\%$, et
-   $Cr_2O_3 \geq 9\%$, et
-   $20\% \geq SiO_2 \geq 0,5\%$, et
-   autres oxydes : $\leq 10\%$.

Dans un souci de clarté, on appelle « particule(s) selon l'invention » une particule d'une poudre selon l'invention qui présente elle-même ladite composition chimique. Au moins 80% en masse des particules d'une poudre selon l'invention sont donc des « particules selon l'invention ».

La composition ci-dessus est bien connue pour la fabrication de blocs réfractaires. Cependant, comme on le verra plus en détail dans la suite de la description, les inventeurs ont découvert que la mise en oeuvre de particules selon l'invention présentant une taille supérieure à 100 $\mu$m et sensiblement sphériques (présentant une circularité médiane supérieure à 0,87) permet d'obtenir une bonne résistance à la corrosion et une excellente résistance aux chocs thermiques.

Une poudre selon l'invention peut encore présenter une ou plusieurs des caractéristiques optionnelles suivantes :

-   De préférence, la composition de la poudre est telle que $Cr_2O_3 + Al_2O_3 + ZrO_2 + MgO + Fe_2O_3 + SiO_2 + TiO_2 \geq 95\%$ ;
-   De préférence, la composition de la poudre est telle que la teneur en $ZrO_2$ est inférieure à 6 %, inférieure à 5 %, voire inférieure à 3 % ;
-   La composition de la poudre est telle que la teneur en $ZrO_2$ est supérieure à 1 %, ou supérieure à 2 % ;
-   De préférence, la composition de la poudre est telle que la teneur totale $Cr_2O_3 + Al_2O_3 + MgO$ est supérieure à 65%, de préférence supérieure à 70%, de préférence supérieure à 80%, voire supérieure à 90%, voire supérieure à 92%, voire supérieure à 94%, en pourcentage massique sur la base des oxydes ; Dans certains modes de réalisation, la composition de la poudre est telle que $Cr_2O_3 + Al_2O_3 > 80\%$, $Cr_2O_3 + Al_2O_3 > 90\%$, ou même $Cr_2O_3 + Al_2O_3 > 95\%$;
-   Dans un mode de réalisation, $MgO < 5\%$, $MgO < 1\%$, $MgO < 0,5\%$, voire $MgO < 0,1\%$, voire la teneur en MgO est sensiblement nulle ;
-   Dans un mode de réalisation, $Fe_2O_3 < 5\%$, $Fe_2O_3 < 1\%$, $Fe_2O_3 < 0,5\%$, voire $Fe_2O_3 < 0,1\%$, voire la teneur en $Fe_2O_3$ est sensiblement nulle ;
-   De préférence, la composition de la poudre est telle que la teneur en $SiO_2$ est supérieure à 1%, voire supérieure à 2%, et/ou inférieure à 16%, de préférence inférieure 13%, de préférence inférieure à 10%, de préférence inférieure à 8%, de préférence inférieure à 6%, de préférence inférieure à 5%, voire inférieure à 4%, voire inférieure à 3% ; Avantageusement, la densification en est améliorée, sans pour autant que la résistance à la corrosion en soit réduite ;
-   De préférence, la composition de la poudre est telle que la teneur en $TiO_2$ est supérieure à 0,5%, et/ou inférieure à 4%, de préférence inférieure à 3%, voire inférieure à 2% ;
-   De préférence, la composition de la poudre est telle que la teneur totale $TiO_2 + SiO_2$ est supérieure à 1,5%, de préférence supérieure à 2% ;
-   De préférence, les particules selon l'invention contiennent une solution solide $Cr_2O_3$-$Al_2O_3$ et/ou un spinelle à base de $Cr_2O_3$-MgO, comme par exemple $MgCr_2O_4$, et/ou un spinelle à base de $Cr_2O_3$-oxyde de fer, comme par exemple $FeCr_2O_4$, et/ou un spinelle à base d'$Al_2O_3$-MgO, comme par exemple $MgAl_2O_4$, et/ou un spinelle à base d'$Al_2O_3$-oxyde de fer, comme par exemple $FeAl_2O_4$, et leurs solutions solides ;
-   De préférence, la composition de la poudre est telle que la teneur en « autres oxydes » est inférieure à 5%, de préférence inférieure à 4%, de préférence inférieure à 3%, de préférence inférieure à 2%, de préférence inférieure à 1% ;
-   De préférence, la composition de la poudre est telle que la somme des teneurs en oxydes représente plus de 90%, plus de 95%, voire sensiblement 100% de la masse de la poudre selon l'invention ;
-   De préférence, les caractéristiques relatives à la composition chimique d'une poudre selon l'invention, et en particulier les caractéristiques optionnelles ci-dessus, sont applicables à plus de 80%, plus de 90%, voire plus de 95% ou plus de 99% en masse, ou sensiblement 100% des particules de la poudre ;
-   Les particules, en particulier les particules selon l'invention, sont des particules agglomérées, de préférence des particules frittées ;

- Les particules selon l'invention ne sont pas fabriquées par atomisation ;
- De préférence, la poudre selon l'invention présente une densité apparente

  - supérieure à 3,0 g/cm$^3$, de préférence, supérieure à 3,3 g/cm$^3$, voire supérieure à 3,5 g/cm$^3$, voire supérieure à 3,6 g/cm$^3$ ; et/ou
  - supérieure à 85%, de préférence supérieure à 88%, de préférence supérieure à 90%, de préférence supérieure à 91%, de préférence supérieure à 92%, voire supérieure à 93%, voire supérieure à 94 %, voire supérieure à 95%, voire supérieure à 96% de la densité théorique ; Avantageusement, la coulabilité en est améliorée ;

- De préférence, la poudre selon l'invention présente une porosité ouverte inférieure à 10%, de préférence inférieure à 6%, de préférence inférieure à 5%, de préférence inférieure à 3%, de préférence inférieure à 2%, de préférence inférieure à 1%, voire inférieure à 0,7%, voire inférieure à 0,6% ; La résistance à la corrosion d'un produit fritté obtenu à partir d'une poudre selon l'invention notamment par contact avec du verre en fusion, en est améliorée ;
- De préférence, plus de 85%, de préférence plus de 90%, de préférence plus de 95%, de préférence plus de 99%, en masse, des particules, en particulier des particules selon l'invention, de préférence sensiblement toutes les particules selon l'invention présentent une taille supérieure à 200 $\mu$m, de préférence supérieure à 300 $\mu$m, de préférence supérieure à 400 $\mu$m, voire supérieure à 0,5 mm et/ou inférieure à 10 mm, de préférence inférieure à 5 mm ;
- De préférence, la circularité médiane $Ci_{50}$ est supérieure à 0,88, de préférence supérieure à 0,90, de préférence supérieure à 0,91, de préférence supérieure à 0,92, de préférence supérieure à 0,93 ; Avantageusement, la résistance aux chocs thermiques en est améliorée ;
- De préférence, plus de 80%, plus de 90%, voire plus de 95% ou plus de 99% en masse, ou sensiblement 100% des particules de la poudre sont des granules ;
- De préférence, la circularité $Ci_{10}$ est supérieure à 0,72, de préférence supérieure à 0,74, de préférence supérieure à 0,76, de préférence supérieure à 0,78, de préférence supérieure à 0,80, de préférence supérieure à 0,82 ;
- De préférence, la convexité médiane de la poudre selon l'invention est supérieure à 0,90, de préférence supérieure à 0,92, de préférence supérieure à 0,94, de préférence supérieure à 0,95, de préférence supérieure à 0,96 ;
- De préférence, la convexité $Co_{10}$ est supérieure à 0,80, de préférence supérieure à 0,82, de préférence supérieure à 0,85, de préférence supérieure à 0,88, de préférence supérieure à 0,90 ;
- De préférence, la poudre selon l'invention présente une porosité ouverte inférieure à 2%, de préférence inférieure à 1%, et une circularité médiane supérieure à 0,90, de préférence supérieure à 0,92.

Dans un premier mode de réalisation particulier, la composition de la poudre selon l'invention est telle que, en pourcentage massique sur la base des oxydes :

- $Cr_2O_3$ : 9% à 50% ;
- $Al_2O_3$ : 45% à 88% ;
- $SiO_2$ < 20%, de préférence $SiO_2$ <16%, de préférence $SiO_2$ < 13%, de préférence $SiO_2$ < 10%, de préférence $SiO_2$ < 8%, de préférence $SiO_2$ < 6%, de préférence $SiO_2$ < 5%, de préférence $SiO_2$ < 4%, de préférence $SiO_2$ < 3% ;
- $Fe_2O_3$ < 1% ;
- $MgO$ < 0,5% ;
- 0,5% < $TiO_2$ < 4%, voire $TiO_2$ < 2% ;
- $ZrO_2$ < 5%;
- autres oxydes < 2%, de préférence ; autres oxydes < 1%.

La teneur en $Cr_2O_3$ peut être comprise entre 10% et 20%, et/ou entre 20% et 30%, et/ou entre 30% et 40%, et/ou entre 40% et 50%, et/ou la teneur en $Al_2O_3$ peut être comprise entre 45% et 55%, et/ou entre 55% et 65%, et/ou entre 65% et 75%, et/ou entre 75% et 88%.

Dans un deuxième mode de réalisation particulier, la composition de la poudre selon l'invention est telle que, en pourcentage massique sur la base des oxydes :

- $Cr_2O_3$ : 50% à 95% ;
- $Al_2O_3$ :2% à 45% ;
- $SiO_2$ < 20%, de préférence $SiO_2$ <16%, de préférence $SiO_2$ < 13%, de préférence $SiO_2$ < 10%, de préférence $SiO_2$ < 8%, de préférence $SiO_2$ < 6%, de préférence $SiO_2$ < 5%, de préférence $SiO_2$ < 4%, de préférence $SiO_2$ < 3% ;
- $Fe_2O_3$ < 1% ;
- $MgO$ < 0,5% ;

- 0,5% < $TiO_2$ < 4%, voire $TiO_2$ < 2% ;
- $ZrO_2$ < 5%;
- autres oxydes < 2%, de préférence : autres oxydes < 1%.

La teneur en $Cr_2O_3$ peut être comprise entre 50% et 60%, et/ou entre 60% et 70%, et/ou entre 70% et 80%, et/ou entre 80% et 95%, et/ou la teneur en $Al_2O_3$ peut être comprise entre 2% et 12%, et/ou entre 12% et 22%, et/ou entre 22% et 32%, et/ou entre 32% et 45%.

Dans un troisième mode de réalisation particulier, la composition de la poudre selon l'invention est telle que, en pourcentage massique sur la base des oxydes :

- $Cr_2O_3$ : 95% à 99% ;
- $Al_2O_3$ : 0 à 4% ;
- $SiO_2$ < 4%, de préférence $SiO_2$ < 3%, de préférence < 2%, de préférence < 1% ;
- $Fe_2O_3$ < 4% ;
- MgO < 0,5% ;
- 0,5% < $TiO_2$ < 5%, voire $TiO_2$ < 4%, voire $TiO_2$ < 2% ;
- $ZrO_2$ < 4%;
- autres oxydes < 2%, de préférence : autres oxydes < 1%.

Dans un quatrième mode de réalisation particulier, la composition de la poudre selon l'invention est telle que, en pourcentage massique sur la base des oxydes :

- $Cr_2O_3$ : 15% à 50% ;
- $Al_2O_3$ : 10% à 80% ;
- 1% < $Fe_2O_3$ < 30%, voire 3% < $Fe_2O_3$ ;
- 0,5% < MgO < 20%, de préférence MgO < 10% ;
- $SiO_2$ < 20%, de préférence $SiO_2$ < 16%, de préférence $SiO_2$ < 13%, de préférence $SiO_2$ < 10%, de préférence $SiO_2$ < 8%, de préférence $SiO_2$ < 6%, de préférence $SiO_2$ < 5%, de préférence $SiO_2$ < 4%, de préférence $SiO_2$ < 3% ;
- 0,5% < $TiO_2$ < 4%, voire $TiO_2$ < 2% ;
- $ZrO_2$ < 5% ;
- autres oxydes < 2%, de préférence autres oxydes < 1%.

La teneur en $Cr_2O_3$ peut être comprise entre 15% et 25%, et/ou entre 25% et 35%, et/ou entre 35% et 50%, et/ou la teneur en $Al_2O_3$ peut être comprise entre 10% et 20%, et/ou entre 20% et 30%, et/ou entre 30% et 40%, et/ou entre 40% et 50%, et/ou entre 50% et 60%, et/ou entre 60% et 70%, et/ou entre 70% et 80%, et/ou la teneur en $Fe_2O_3$ peut être comprise entre 3% et 10%, et/ou entre 10% et 20%, et/ou entre 20% et 30%.

Dans la mesure du possible, les modes de réalisation particuliers peuvent être combinés avec l'une quelconque des caractéristiques préférées décrites ci-dessus.

En particulier, de préférence; en combinaison avec les modes de réalisation particuliers décrits ci-dessus, la poudre selon l'invention présente une porosité ouverte inférieure à 2%, de préférence inférieure à 1%, la circularité médiane étant supérieure à 0,90, de préférence supérieure à 0,92.

En outre, de préférence, les caractéristiques relatives à la composition chimique des modes de réalisation particuliers et de leurs variantes décrits ci-dessus sont applicables à plus de 80%, plus de 90%, voire plus de 95% ou plus de 99% en masse, ou sensiblement 100% des particules de la poudre selon l'invention.

Une poudre selon l'invention peut être notamment utilisée pour fabriquer un mélange particulaire selon l'invention comportant plus de 10% de particules présentant une taille inférieure ou égale à 50 μm, dites « particules matricielles », le mélange particulaire comportant en outre plus de 15% d'une poudre selon l'invention, en pourcentage en masse sur la base du mélange particulaire.

Un mélange particulaire selon l'invention peut encore présenter une ou plusieurs des caractéristiques optionnelles suivantes :

- De préférence, ladite poudre représente plus de 20%, de préférence plus de 25%, voire plus de 30%, voire plus de 40% du mélange particulaire selon l'invention, en pourcentage massique sur la base du mélange particulaire ;
- De préférence, ladite poudre constitue au moins 80%, voire au moins 85%, voire au moins 90%, voire au moins 95%, voire sensiblement 100%, en masse des particules présentant une taille supérieure à 100 μm ;
- De préférence, les particules du mélange particulaire présentent une taille inférieure à 10 mm, de préférence inférieure à 5 mm ;
- De préférence, le mélange particulaire contient au moins 10% de particules de taille supérieure à 2 mm, en pourcentage massique sur la base du mélange particulaire ;

- De préférence, plus de 80%, de préférence plus de 90%, de préférence plus de 95%, de préférence plus de 99%, en masse des particules ayant une taille supérieure à 50 μm, dites « grains », présentent une densité apparente supérieure à 85%, de préférence supérieure à 88%, de préférence supérieure à 90%, de préférence supérieure à 91%, de préférence supérieure à 92%, voire supérieure à 93% de la densité théorique ;
- De préférence, la poudre selon l'invention présente une porosité ouverte inférieure à 10%, de préférence inférieure à 6%, de préférence inférieure à 5%, de préférence inférieure à 3%, de préférence inférieure à 2%, de préférence inférieure à 1%, voire inférieure à 0,7%, voire même inférieure à 0,6% ;
- Les grains contenant de l'oxyde de chrome sont de préférence des particules frittées ;
- Dans un mode de réalisation particulier, au moins 80%, de préférence au moins 90%, de préférence au moins 95%, de préférence au moins 99%, voire sensiblement 100% en masse des grains sont des particules selon l'invention.

De préférence, dans un premier mode de réalisation particulier, le mélange particulaire selon l'invention présente la composition suivante, en pourcentage massique sur la base des oxydes :

- $Cr_2O_3$ + $Al_2O_3$ > 80%, de préférence $Cr_2O_3$ + $Al_2O_3$ > 90%, de préférence $Cr_2O_3$ + $Al_2O_3$ > 95%,
- 10% ≤ $Cr_2O_3$ < 50%, de préférence $Cr_2O_3$ < 47% ;
- $SiO_2$ < 20%, de préférence $SiO_2$ <16%, de préférence $SiO_2$ < 13%, de préférence $SiO_2$ < 10%, de préférence $SiO_2$ < 8%, de préférence $SiO_2$ < 6%, de préférence $SiO_2$ < 5%, de préférence $SiO_2$ < 4%, de préférence $SiO_2$ < 3% ;
- $Fe_2O_3$ < 1%;
- $MgO$ < 0,5% ;
- 0,5% < $TiO_2$ < 4%, voire $TiO_2$ < 2% ;
- $ZrO_2$ < 5%;
- autres oxydes < 2%, de préférence autres oxydes < 1%.

La teneur en $Cr_2O_3$ peut être comprise entre 10% et 20%, entre 20% et 30%, entre 30% et 40%, ou entre 40% et 50%, et/ou la teneur en $Al_2O_3$ peut être comprise entre 45% et 55%, entre 55% et 65%, entre 65% et 75%, ou entre 75% et 88%.

De préférence, en particulier dans ce premier mode de réalisation particulier, le mélange particulaire contient une poudre selon le premier mode de réalisation particulier de ladite poudre.

De préférence, dans un deuxième mode de réalisation particulier, le mélange particulaire selon l'invention présente la composition suivante, en pourcentage massique sur la base des oxydes :

- $Cr_2O_3$ + $Al_2O_3$ > 80%, de préférence $Cr_2O_3$ + $Al_2O_3$ > 90%, de préférence $Cr_2O_3$ + $Al_2O_3$ > 95%,
- 50% < $Cr_2O_3$ < 83%
- $SiO_2$ < 20%, de préférence $SiO_2$ <16%, de préférence $SiO_2$ < 13%, de préférence $SiO_2$ < 10%, de préférence $SiO_2$ < 8%, de préférence $SiO_2$ < 6%, de préférence $SiO_2$ < 5%, de préférence $SiO_2$ < 4%, de préférence $SiO_2$ < 3% ;
- $Fe_2O_3$ < 1% ;
- $MgO$ < 0,5% ;
- 0,5% < $TiO_2$ < 4%, voire $TiO_2$ < 2% ;
- $ZrO_2$ < 5% ;
- autres oxydes < 2%, de préférence : autres oxydes < 1%.

La teneur en $Cr_2O_3$ peut être comprise entre 50% et 60%, entre 60% et 70%, entre 70% et 80%, ou entre 80% et 95%, et/ou la teneur en $Al_2O_3$ peut être comprise entre 2% et 12%, entre 12% et 22%, entre 22% et 32%, ou entre 32% et 45%.

De préférence, en particulier dans ce deuxième mode de réalisation particulier, le mélange particulaire contient une poudre selon le deuxième mode de réalisation particulier de ladite poudre.

De préférence, dans un troisième mode de réalisation particulier, le mélange particulaire selon l'invention présente la composition suivante, en pourcentage massique sur la base des oxydes :

- $Cr_2O_3$ + $Al_2O_3$ > 90%
- 80% < $Cr_2O_3$, de préférence 83% < $Cr_2O_3$ ;
- $SiO_2$ < 4%, de préférence $SiO_2$ < 3%, de préférence $SiO_2$ < 2%, de préférence $SiO_2$ < 1%;
- $Fe_2O_3$ < 1% ;
- $MgO$ < 0,5% ;
- 0,5% < $TiO_2$ < 4%, voire $TiO_2$ < 2% ;
- $ZrO_2$ < 5% ;

- autres oxydes < 2%, de préférence : autres oxydes < 1%.

De préférence, en particulier dans ce troisième mode de réalisation particulier, le mélange particulaire contient une poudre selon l'invention et selon le troisième mode de réalisation particulier de ladite poudre.

De préférence, dans un quatrième mode de réalisation particulier, le mélange particulaire selon l'invention présente la composition suivante, en pourcentage massique sur la base des oxydes :

- $Cr_2O_3 + Al_2O_3 > 55\%$
- $Cr_2O_3 < 50\%$ ;
- $SiO_2 < 20\%$, de préférence $SiO_2 < 16\%$, de préférence $SiO_2 < 13\%$, de préférence $SiO_2 < 10\%$, de préférence $SiO_2 < 8\%$, de préférence $SiO_2 < 6\%$, de préférence $SiO_2 < 5\%$, de préférence $SiO_2 < 4\%$, de préférence $SiO_2 < 3\%$ ;
- $1\% < Fe_2O_3 < 30\%$ ;
- $MgO < 20\%$, de préférence $< 10\%$ ;
- $0,5\% < TiO_2 < 4\%$, voire $TiO_2 < 2\%$ ;
- $ZrO_2 < 5\%$ ;
- autres oxydes < 2%, de préférence : autres oxydes < 1%.

La teneur en $Cr_2O_3$ peut être comprise entre 15% et 25%, entre 25% et 35%, ou entre 35% et 50%, et/ou la teneur en $Al_2O_3$ peut être comprise entre 10% et 20%, entre 20% et 30%, entre 30% et 40%, entre 40% et 50%, entre 50% et 60%, entre 60% et 70%, ou entre 70% et 80%, et/ou la teneur en $Fe_2O_3$ peut être comprise entre 3% et 10%, entre 10% et 20%, ou entre 20% et 30%.

De préférence, en particulier dans ce quatrième mode de réalisation particulier, le mélange particulaire contient une poudre selon le quatrième mode de réalisation particulier de ladite poudre.

En particulier lorsqu'il est destiné à être utilisé comme matière première pour la fabrication d'une pièce frittée, un mélange particulaire selon l'invention peut comporter, en complément à 100% des oxydes susmentionnés, plus de 0,1% et/ou moins de 6% en masse d'un additif de mise en forme.

De préférence, les particules selon l'invention n'ont pas été broyées avant mélange avec l'additif de mise en forme.

Il est aussi décrit un procédé de fabrication d'un mélange particulaire selon l'invention par mélange d'une poudre selon l'invention avec d'autres matières premières particulaires.

Il est décrit également un procédé de fabrication d'un produit réfractaire fritté, comportant les étapes successives suivantes :

A) préparation d'une charge de départ par mélange d'un mélange particulaire selon l'invention et d'eau ;
B) mise en forme de ladite charge de départ de manière à former une préforme;
C) frittage de ladite préforme.

L'invention concerne également un produit fritté obtenu par frittage d'un mélange particulaire selon l'invention, en particulier suivant les étapes A) à C) ci-dessous.

De préférence, ce produit présente une densité supérieure à 3,1 g/m³, voire supérieure à 3,3 g/m³ et/ou inférieure à 4,5 g/cm³, voire inférieure à 4,3 g/cm³.

L'invention concerne enfin un dispositif choisi parmi un réacteur, en particulier un réacteur de gazéificateur, un four de verrerie, un régénérateur, et un canal de distribution du verre en fusion comportant un bloc et/ou un revêtement en un produit fritté selon l'invention.

## Définitions

La « fraction matricielle » est constituée des particules de taille inférieure ou égale à 50 μm, dites « particules matricielles ». Ces particules sont destinées à constituer la matrice du produit réfractaire. La fraction complémentaire, constituée des particules présentant une taille supérieure à 50 μm ou « grains » est appelée « granulat ».

Par « taille d'une particule », on entend la dimension d'une particule donnée classiquement par une caractérisation de distribution granulométrique réalisée avec un granulomètre laser. Le granulomètre laser utilisé pour les exemples est un Partica LA-950 de la société HORIBA.

On appelle « circularité » d'une particule observée, le rapport $P_D/P_r$, $P_r$ désignant le périmètre de la particule telle qu'observée, et $P_D$ désignant le périmètre du disque ayant la même surface que celle de la particule telle qu'observée. La circularité dépend de la direction d'observation.

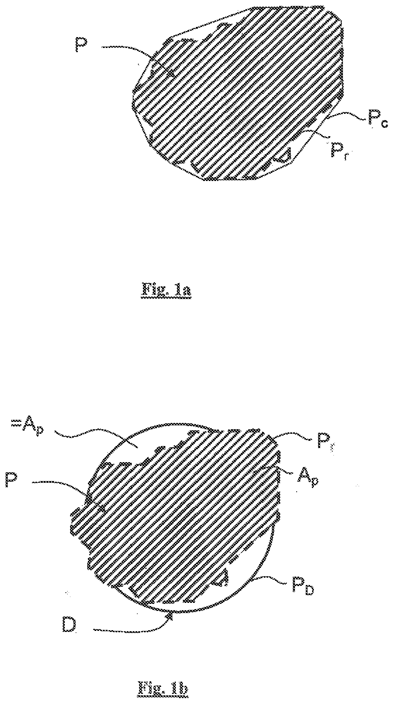

Comme représenté sur la figure 1b, pour évaluer la circularité « Ci » d'une particule P, on détermine le périmètre $P_D$ du disque D présentant une aire égale à l'aire $A_p$ de la particule P sur une photographie de cette particule. On détermine par ailleurs le périmètre $P_r$ de cette particule.

$$Ci = \frac{2 * \sqrt{\pi A_p}}{Pr}.$$

La circularité est égale au rapport de $P_D/P_r$. Ainsi Plus la particule est de forme allongée, plus la circularité est faible. Le manuel d'utilisation du SYSMEX FPIA 3000 décrit également cette procédure (voir « detailed specification sheets » sur www.malvern.co.uk).

Les percentiles ou « centiles » 10 ($Ci_{10}$) et 50 ($Ci_{50}$) d'un ensemble de particules sont les circularités de particules correspondant aux pourcentages, en nombre, de 10 % et 50 % respectivement, sur la courbe de distribution des circularités cumulée des particules de cet ensemble, les circularités de particules étant classées par ordre croissant. Par exemple, 10 % en masse des particules de cet ensemble ont une circularité inférieure à $Ci_{10}$. Les percentiles peuvent être évalués à l'aide d'un appareil du type Morphologi® G3 commercialisé par la société Malvern. $Ci_{50}$ est encore appelé « circularité médiane ».

Par extension, on utilise ces percentiles pour caractériser la distribution des circularités des particules d'un matériau fritté obtenu à partir de cette poudre.

Pour déterminer les percentiles $Ci_{10}$ et $Ci_{50}$ l'ensemble de particules est versé sur une plaque plane et observé perpendiculairement à cette plaque. Le nombre de particules comptabilisées est supérieur à 250, ce qui permet d'obtenir des percentiles sensiblement identiques, quelle que soit la façon selon laquelle les particules ont été versées sur la plaque. Une méthode de détermination est décrite plus en détail dans les exemples ci-dessous.

On appelle « convexité » d'une particule observée, le rapport $P_c / P_r$, $P_c$ désignant le périmètre convexe de la particule telle qu'observée et $P_r$ désignant le périmètre de ladite particule telle qu'observée, comme représenté sur la figure 1a. La convexité d'une particule dépend de la direction d'observation.

Les percentiles ou « centiles » 10 ($Co_{10}$) et 50 ($Co_{50}$) d'un ensemble de particules sont les convexités de particules correspondant aux pourcentages, en nombre, de 10 % et 50 %, respectivement, sur la courbe de distribution des convexités cumulée des particules de cet ensemble, les convexités de particules étant classées par ordre croissant Par exemple, 10 % en masse des particules de cet ensemble ont une convexité inférieure à $Co_{10}$. Les percentiles peuvent être évalués à l'aide d'un appareil du type Morphologi® G3 commercialisé par la société Malvern. $Co_{50}$ est encore appelé « convexité médiane ».

Par extension, on utilise ces percentiles pour caractériser la distribution des convexités des particules d'un matériau fritté obtenu à partir de cette poudre.

Pour déterminer les percentiles $Co_{10}$ et $Co_{50}$ l'ensemble de particules est versé sur une plaque plane et observé perpendiculairement à cette plaque. Le nombre de particules est supérieur à 250, ce qui permet d'obtenir des percentiles sensiblement identiques, quelle que soit la façon selon laquelle les particules ont été versées sur la plaque. Une méthode de détermination est décrite plus en détail dans les exemples ci-dessous.

Un « granule » est une particule présentant une circularité supérieure à 0,87.

On appelle « particule agglomérée », ou « agglomérat », une particule formée par un ensemble d'autres particules. Des particules agglomérées peuvent être notamment obtenues par frittage ou au moyen d'un liant.

Sauf indication contraire, tous les pourcentages sont des pourcentages massiques.

Les analyses chimiques ou les compositions chimiques « des particules selon l'invention » font référence à la composition de chacune desdites particules. Les analyses chimiques ou les compositions chimiques d'un « mélange particulaire » ou d'une « poudre » font référence à la composition moyenne, sur l'ensemble des particules concernées.

Dans les formules liant différentes teneurs en oxydes, le signe « + » signifie classiquement « et/ou ». Ainsi, dans une poudre selon l'invention, $Al_2O_3$, $ZrO_2$, MgO, $Fe_2O_3$, et $TiO_2$ en particulier sont optionnels.

## Brève description des figures

D'autres caractéristiques et avantages de l'invention apparaîtront encore à la lecture de la description détaillée et à l'examen du dessin dans lequel

- les figures 1a et 1b illustrent la méthode mise en oeuvre pour mesurer la convexité et la circularité, respectivement ;
- la figure 2 représente une photo d'une coupe d'un produit réfractaire selon l'invention.

## Description détaillée

*Fabrication d'une poudre selon l'invention*

Des particules selon l'invention peuvent être fabriquées suivant un procédé conventionnel comportant les étapes successives suivantes :

a) préparation d'une charge de départ par mélange de matières premières et d'eau ;
b) mise en forme de ladite charge de départ de manière à former une poudre selon l'invention;
c) optionnellement, frittage des particules de la poudre obtenue à l'étape b).

Un exemple de procédé est décrit en détail dans les exemples.

A l'étape a), le mélange des matières premières est adapté de façon à obtenir une poudre et des particules présentant la composition chimique désirée. Tout moyen de mélange peut être utilisé, comme par exemple un mélangeur ou un malaxeur intensif.

La teneur en « autres oxydes » est limitée à 10 %. Avec une teneur en « autres oxydes » inférieure à 10 %, les inventeurs considèrent que les effets avantageux de la présente invention ne sont pas substantiellement affectés.

Les « autres oxydes » peuvent être en particulier les oxydes réfractaires que l'on trouve habituellement dans les produits réfractaires comportant de l'oxyde de chrome, par exemple CaO, $K_2O$ et $Na_2O$.

A l'étape b), de préférence, la mise en forme ne comporte pas d'opération d'atomisation, en particulier une étape d'atomisation d'une barbotine ou « spray drying » en anglais. Un tel procédé conduit en effet à une faible densité et/ou à une poudre dont les particules présentent une taille faible.

L'étape b) peut comprendre une opération de granulation. Une telle opération ne peut cependant garantir l'obtention d'une circularité médiane supérieure à 0,87 et d'une densité supérieure à 85% de la densité théorique. Pour obtenir un tel résultat, un malaxeur de type intensif est de préférence utilisé, de préférence avec une vitesse linéaire en bout de tourbillon supérieure à 6 m/sec, et avec une alimentation séquentielle dudit malaxeur en charge de départ.

A l'étape c), les particules sont frittées, par exemple dans un four de cuisson. Tous les fours de cuisson peuvent être utilisés, comme par exemple les fours intermittents, mais également les fours rotatifs. Les paramètres du frittage sont déterminés en fonction de la composition des particules.

La température de frittage peut être comprise entre 1400°C et 1700°C. Le frittage peut s'effectuer sous air, mais également en condition neutre (sous azote par exemple), voire en condition réductrice (sous excès de monoxyde de carbone par exemple). De préférence, le frittage s'effectue sous air.

Le temps de palier peut être compris entre 1 heure et 10 heures, de préférence entre 2 heures et 5 heures.

La porosité ouverte de la poudre selon l'invention peut être ajustée en modifiant la distribution granulométrique des matières premières particulaires mises en oeuvre, ou en agissant sur la température et/ou la durée de palier lors du frittage.

Les inventeurs ont étudié l'effet de la porosité ouverte de la poudre selon l'invention sur les propriétés du produit réfractaire fritté obtenu à partir de cette poudre. Ils ont ainsi découvert que la substitution de grains de chamotte (classiquement utilisés, qui ne sont pas des granules) par une poudre selon l'invention présentant une porosité ouverte supérieure à 6% conduit à une dégradation de la résistance à la corrosion par le verre en fusion de ce produit réfractaire fritté.

En revanche, de manière surprenante, lorsque la porosité ouverte de la poudre selon l'invention utilisée est inférieure à 2%, la résistance à la corrosion est supérieure à celle des produits classiques à grains de chamotte.

Les inventeurs ont également étudié l'effet de la porosité ouverte de la poudre selon l'invention utilisée sur d'une charge de départ composée de cette poudre et d'eau. Ils ont ainsi découvert que la substitution de grains de chamotte par une poudre selon l'invention présentant une porosité ouverte supérieure à 10% conduit à une dégradation de la coulabilité de la charge de départ lors de la mise en forme. En revanche, de manière surprenante, lorsque la porosité ouverte de la poudre selon l'invention utilisée est inférieure à 6% la coulabilité est supérieure à celle des produits classiques à grains de chamotte.

La coulabilité est encore améliorée lorsque la porosité ouverte de la poudre selon l'invention est inférieure à 2%.

De préférence, la poudre selon l'invention présente une porosité ouverte inférieure à 6%, de préférence inférieure à 2%.

### *Mélanges particulaires*

Une poudre selon l'invention peut être incorporée dans un mélange particulaire selon l'invention.

Un mélange particulaire selon l'invention comporte, de préférence, plus de 15%, plus de 20%, voire plus de 25% et/ou moins de 45%, moins de 40%, voire moins de 35%, voire moins de 30% de particules matricielles, en pourcentage massique.

De préférence, la fraction matricielle et de préférence au moins 80% en masse des particules matricielles présentent une composition chimique telle que, en pourcentages massiques sur la base des oxydes et pour un total de 100% :

- $Cr_2O_3 + Al_2O_3 + ZrO_2 + MgO + FeO_3 + SiO_2 + TiO_2 + CaO \geq 90\%$, de préférence $Cr_2O_3 + Al_2O_3 + ZrO_2 + MgO + Fe_2O_3 + SiO_2 + TiO_2 + CaO \geq 95\%$, et

- $Cr_2O_3 + Al_2O_3 + MgO \geq 50\%$, et
- $Cr_2O_3 \geq 7\%$, et
- $15\% \geq SiO_2 \geq 0,1\%$, et
- autres oxydes $\leq 10\%$, de préférence autres oxydes $\leq 5\%$.

De préférence, au moins 90% en masse des particules matricielles présentent une taille inférieure à 40 $\mu$m, de préférence inférieure à 30 $\mu$m, de préférence inférieure à 20 $\mu$m, voire inférieure à 10 $\mu$m.

De préférence, la composition de la fraction matricielle est telle que

- la teneur totale $Cr_2O_3 + Al_2O_3 + MgO$ est supérieure à 65%, de préférence supérieure à 70%, de préférence supérieure à 80%, voire supérieure à 90%, en pourcentage massique sur la base des oxydes ; et/ou
- la teneur en $SiO_2$ est inférieure à 12%, de préférence inférieure à 10%, de préférence inférieure à 8%, de préférence inférieure à 6%, de préférence inférieure à 5%, voire inférieure à 4%, voire inférieure à 3% ; et/ou
- la teneur en $TiO_2$ est inférieure à 7%, voire inférieure à 4%, voire inférieure à 3%, voire inférieure à 2% ; et/ou
- la teneur en « autres oxydes » est inférieure à 5%, de préférence inférieure à 4%, de préférence inférieure à 3%, de préférence inférieure à 2%, de préférence inférieure à 1%;

Dans certains modes de réalisation, la composition de la fraction matricielle est telle que $Cr_2O_3 + Al_2O_3 > 80\%$, $Cr_2O_3 + Al_2O_3 > 90\%$, ou même $Cl_2O_3 + Al_2O_3 > 95\%$.

Dans certains modes de réalisation, la composition de la fraction matricielle est telle que la teneur en $TiO_2$ est inférieure à 0,2%.

Dans certains modes de réalisation, la composition de la fraction matricielle est telle que la teneur en $Al_2O_3$ est supérieure à 5%, supérieure à 7,5%, supérieure à 10%, supérieure à 15% et/ou est inférieure à 72%, inférieure à 65%, inférieure à 6.0%, inférieure à 50%.

De préférence, les particules matricielles contiennent une solution solide $Cr_2O_3$-$Al_2O_3$ et/ou un spinelle à base de $Cr_2O_3$-MgO, par exemple $MgCr_2O_4$, et/ou un spinelle à base de $Cr_2O_3$-oxyde de fer, par exemple $FeCr_2O_4$, et/ou un spinelle à base d'$Al_2O_3$-MgO, par exemple $MgAl_2O_4$, et/ou un spinelle à base d'$Al_2O_3$-oxyde de fer, par exemple $FeAl_2O_4$, et leurs solutions solides.

De préférence toujours, la somme des teneurs en oxydes dans les particules de la fraction matricielle représente plus de 90%, plus de 95%, voire sensiblement 100% de la masse desdites particules matricielles.

Cette fraction matricielle est de préférence constituée de particules d'oxyde de chrome d'une part, et, d'autre part, de particules d'alumine et/ou de zircone et/ou de magnésie et/ou de zircon et/ou d'oxyde de fer et/ou d'oxyde de titane et/ou de silice et/ou de chaux. De préférence, la fraction matricielle est constituée de particules composées d'une part, d'oxyde de chrome et, d'autre part, d'alumine et/ou de magnésie et/ou d'oxyde de fer et/ou d'oxyde de titane et/ou de silice et/ou de chaux, ou est constituée de mélanges de telles particules. Par exemple, la fraction matricielle peut être un mélange de particules d'oxyde de chrome et de particules d'alumine, mais également être constituée de particules d'oxyde de chrome et d'alumine, sous la forme par exemple d'une solution solide. De préférence, lesdites particules matricielles sont des particules de solution solide des oxydes cités ci-dessus. De préférence, les particules matricielles sont composées d'oxyde de chrome d'une part et, d'autre part, d'alumine et/ou de chaux et/ou de zircone et/ou d'oxyde de titane.

La quantité de particules matricielles de zircone est de préférence inférieure à 10%, de préférence inférieure à 8%, de préférence inférieure à 5%, en pourcentage massique sur la base des oxydes.

Dans un mode de réalisation, le mélange particulaire ne contient pas de particules matricielles de zircone.

La taille médiane des particules matricielles peut être inférieure à 25 microns, inférieure à 15 microns, inférieure à 10 microns, voire inférieure à 7 microns.

Un mélange particulaire selon l'invention comporte, de préférence, moins de 80%, voire moins de 75% de grains, en pourcentage massique sur la base du mélange particulaire.

Le granulat peut être constitué de particules d'oxyde de chrome d'une part, et, d'autre part, des particules d'alumine et/ou de zircone et/ou de magnésie et/ou de zircon et/ou d'oxyde de fer et/ou d'oxyde de titane et/ou de silice. De préférence, le granulat est constitué de particules composées d'oxyde de chrome d'une part, et, d'autre part, d'alumine et/ou de zircone et/ou de magnésie et/ou de zircon et/ou d'oxyde de fer et/ou d'oxyde de titane et/ou de silice, ou de mélanges de telles particules. Par exemple, le granulat peut être un mélange de particules d'oxyde de chrome et de particules d'alumine, mais également être un mélange de particules d'oxyde de chrome et d'alumine, sous la forme par exemple d'une solution solide. De préférence, les grains sont composés d'oxyde de chrome d'une part, et, d'autre part, d'alumine et/ou de zircone et/ou d'oxyde de titane.

De préférence également, le mélange particulaire ne contient pas de particules de zircone dans le granulat, de préférence ne contient pas de grains de zircone, en particulier de particules de zircone de taille comprise entre 50 $\mu$m et 500 $\mu$m. Avantageusement, la résistance au lâcher de pierres au contact du verre en fusion en est améliorée.

Les inventeurs ont par ailleurs découvert que, pour augmenter la durée de vie des produits réfractaires selon l'invention lorsqu'ils sont disposés en contact avec du verre en fusion, il est avantageux que le mélange particulaire selon l'invention présente une teneur en oxyde de chrome, notée « $Cr_T$ », comprise entre 10% et 82%, de préférence comprise entre 10% et 80%, en pourcentage massique sur la base des oxydes du mélange réfractaire,

la fraction matricielle étant telle que

$$0,39.(Cr_T)+24 < Cr_M < 0,39.(Cr_T)+52 \qquad (I),$$

- $Cr_M$ désignant la teneur massique en oxyde de chrome de la fraction matricielle en pourcentage en masse sur la base des oxydes de la fraction matricielle, et
  le granulat étant tel que $x_{II} \geq 97\%$, $x_{III} \geq 70\%$, et $x_{IV} \leq x_{III} - 70\%$
- $Cr_G$ désignant la teneur massique en oxyde de chrome d'un grain, en pourcentage en masse sur la base des oxydes de ce grain,
- $x_{II}$ désignant la quantité, en pourcentage massique sur la base du granulat, de grains respectant la condition suivante **(II)** :

  – si $10\,\% \leq Cr_T \leq 30\,\%$, alors $Cr_G \leq 0,018.(Cr_T)^2 - 0,390.(Cr_T)+58,8$ ;

  – si $30\,\% < Cr_T \leq 60\,\%$, alors $Cr_G \leq 1,22.(Cr_T) + 26,7$ ; \qquad (II)

  – si $60\,\% < Cr_T \leq 82\,\%$, en particulier si $Cr_T \leq 80\,\%$, alors $Cr_G \leq 100$,

- $x_{III}$ désignant la quantité, en pourcentage massique sur la base du granulat, de grains respectant la condition suivante **(III):**

  – si $10\,\% \leq Cr_T \leq 30\,\%$, alors

  $\qquad 0,018.(Cr_T)^2-0,390.(Cr_T)+9,10 \leq Cr_G \leq 0,018.(Cr_T)^2-0,390.(Cr_T)+25,10$ ;

  – si $30\,\% < Cr_T \leq 60\,\%$, alors $1,17.(Cr_T)-21,5 \leq Cr_G \leq 1,17.(Cr_T)-5,5$ ; \qquad (III)

  – si $60\,\% < Cr_T \leq 82\,\%$, en particulier si $Cr_T \leq 80\,\%$, alors $1,17.(Cr_T)-21,5 \leq\, \leq 1,67.(Cr_T)-35,5$ ($Cr_G$ restant bien entendu inférieur ou égal à 100%)

- $x_{IV}$ désignant la quantité, en pourcentage massique sur la base du granulat, de grains respectant la condition suivante **(IV)** :

  – Si $10\,\% \leq Cr_T \leq 30\,\%$, alors $0,018.(Cr_T)^2-0,390.(Cr_T)+9,10 > Cr_G$ ;

  – Si $30\,\% < Cr_T \leq 60\,\%$, alors $1,17.(Cr_T)-21,5 > Cr_G$ ; \qquad (IV)

  – Si $60\,\% < Cr_T \leq 82\,\%$, en particulier si $Cr_T \leq 80\,\%$, alors $1,17.(Cr_T)-21,5 > Cr_G$.

Les inventeurs ont en effet constaté que cette composition conduit avantageusement à un profil de corrosion particulièrement uniforme, et donc prolonge la durée de vie des produits réfractaires.

$$\text{De préférence } 0,39.(Cr_T)+29 < Cr_M < 0,39.(Cr_T)+47 \qquad (V) ;$$

$$\text{De préférence encore } 0,39.(Cr_T)+32 < Cr_M < 0,39.(Cr_T)+44,5 \qquad (VI).$$

De préférence $x_{II}$ est supérieur à 98%, de préférence supérieur à 99%, de préférence sensiblement égal à 100%.
De préférence, $x_{III}$ est supérieur à 85% et $x_{IV}$ est inférieur à 1%, de préférence sensiblement égal à 0%.

De préférence, au moins 70% en masse des grains présentent, en pourcentage en masse sur la base des oxydes, une teneur en oxyde de chrome respectant la condition suivante **(VII)** :

- Si $10\ \% \leq Cr_T \leq 30\ \%$, alors $0,018.(Cr_T)^2 - 0,390.(Cr_T) + 13,10 \leq Cr_G \leq 0,019.(Cr_T)^2 - 0,390.(Cr_T) + 21,10$ ;
- Si $30\ \% < Cr_T \leq 60\ \%$, alors $1,17.(Cr_T) - 17,5 \leq Cr_G \leq 1,17.(Cr_T) - 9,5$ ; .
- Si $60\ \% < Cr_T \leq 82\ \%$, en particulier si $Crr \leq 80\ \%$, alors $1,67.(Cr_T) - 51.5 \leq Cr_G \leq 1,67.(Cr_T) - 39,5$.

De préférence, au moins 70% en masse des grains présentent, en pourcentage en masse sur la base des oxydes, une teneur en oxyde de chrome respectant la condition suivante **(VIII)** :

- Si $10\ \% \leq Cr_T \leq 30\ \%$, alors $0,018.(Cr_T)^2 - 0,390.(Cr_T) + 13,10 \leq Cr_G \leq 0,018.(Cr_T)^2 - 0,390.(Cr_T) + 21,10$ ;
- Si $30\ \% < Cr_T \leq 60\ \%$, alors $1,17.(Cr_T) - 17,5 \leq Cr_G \leq 1,17.(Cr_T) - 9,5$ ;
- Si $60\ \% < Cr_T \leq 82\ \%$, en particulier si $Cr_T \leq 80\ \%$, alors $1,67.(Cr_T) - 47,5 \leq Cr_G \leq 1,67.(Cr_T) - 39,5$.

Dans un mode de réalisation particulier, la fraction matricielle présente une teneur en oxyde de chrome « $Cr_M$ » respectant la condition (**VI**) et au moins 70% en masse des grains présentent une teneur en oxyde de chrome « $Cr_G$ » respectant la condition **(VIII)**.

Dans un second mode de réalisation particulier, la fraction matricielle présente une teneur en oxyde de chrome « $Cr_M$ » respectant la condition (**VI**) et au moins 99% en masse des grains présentent une teneur en oxyde de chrome « $Cr_G$ » respectant la condition **(VIII)**.

De préférence, au moins 90%, de préférence au moins 95%, de préférence au moins 99%, de préférence sensiblement 100% en masse des grains présentent une teneur en oxyde de chrome « $Cr_G$ » respectant la condition **(III)** et/ou la condition **(VII)**.

Dans un mode de réalisation, une ou plusieurs des conditions (I) à (VI) s'appliquent à plus de 80%, plus de 90%, voire plus de 95% ou sensiblement 100% des particules selon l'invention, en pourcentage massique.

L'écart type de la distribution de la teneur en oxyde de chrome des grains est de préférence inférieur à 1,5, de préférence inférieur à 1, de préférence encore inférieur à 0,75. La différence entre la teneur en oxyde de chrome la plus faible et la plus forte est de préférence inférieure à 9%, de préférence inférieure à 6%, de préférence inférieure à 4,5%. Les grains ont alors tous des teneurs en oxyde de chrome similaires.

L'écart type de la distribution de la teneur en chacun des différents constituants des grains est de préférence inférieur à 1,5, de préférence inférieur à 1, de préférence encore inférieur à 0,75.

Les grains ont alors tous des compositions similaires.

Des particules selon l'invention peuvent être préparées à partir d'un mélange de matières premières comportant déjà un additif de mise en forme. L'additif peut en particulier être choisi dans le groupe constitué par :

- les argiles;
- les plastifiants, comme le polyéthylène glycol (ou « PEG ») ou l'alcool polyvinylique (ou « APV ») ;
- les ciments, de préférence à haute teneur en alumine ;
- les alumines hydratables, comme la boehmite ;
- les liants dont liants temporaires organiques tels que des résines, les lignosulfonates, la carboxyméthylcellulose ou la dextrine ;
- les défloculants, tels que des polyphosphates de métaux alcalins, des polyacrylates de métaux alcalins, des polycarboxylates ; et
- les mélanges de ces produits.

De préférence, l'additif de mise en forme est choisi dans le groupe constitué par les ciments, les défloculants, les argiles, les lignosulfonates, l'APV et leurs mélanges.

### *Procédé de fabrication d'un produit réfractaire selon l'invention*

Une poudre selon l'invention peut être avantageusement utilisée pour fabriquer des produits présentant un granulat lié par une matrice liante, en particulier en substitution totale ou partielle à des grains de chamotte.

A cet effet, un procédé comportant les étapes A) à C) décrites ci-dessus peut être mis en oeuvre.

Ce procédé permet avantageusement de fabriquer un produit réfractaire fritté présentant une densité apparente comprise entre 3,1 et 4,5 $g/cm^3$, de préférence comprise entre 3,3 et 4,3 $g/cm^3$.

Les modèles de compaction d'Andréasen ou de Fuller-Bolomey peuvent être utilisés pour modifier la densité apparente des produits réfractaires frittés. De tels modèles de compaction sont notamment décrits dans l'ouvrage intitulé « Traité de céramiques et matériaux minéraux », C.A. Jouenne, Editions Septima. Paris (1984), pages 403 à 405.

A l'étape A), une poudre selon l'invention est mélangée avec d'autres matières premières et/ou avec un additif de mise en forme pour former la charge de départ.

De préférence, les particules de cette poudre sont frittées, c'est-à-dire consolidées thermiquement. Elles peuvent ainsi avantageusement conserver leur forme sphérique lors de leur manipulation. Pour la même raison, ces particules ne doivent pas être toutes broyées avant d'être introduites dans la charge de départ.

Un mélange particulaire peut être également livré prêt-à-l'emploi. Il suffit alors de le mélanger à de l'eau pour préparer la charge de départ.

La quantité d'eau est fonction du procédé utilisé à l'étape B).

Dans le cas d'une mise en forme par pressage à froid, un ajout d'une quantité d'eau comprise entre 1,5% et 4%, en pourcentage massique sur la base du mélange particulaire sans les additifs, est préféré. Dans le cas d'une mise en forme faisant intervenir une liaison hydraulique, comme par exemple un coulage, un ajout d'une quantité d'eau comprise entre 3 et 7%, en pourcentage massique sur la base du mélange particulaire sans les additifs, est préféré.

Sans pouvoir l'expliquer théoriquement, les inventeurs ont découvert que la forme sensiblement sphérique des particules d'une poudre selon l'invention améliore la résistance aux chocs thermiques, indépendamment de la porosité ouverte de la poudre.

Comme expliqué ci-dessus, les inventeurs ont également découvert que la porosité ouverte de la poudre influence la coulabilité de la charge de départ.

Il est possible de broyer les particules d'une poudre selon l'invention de façon à en diminuer la taille et à obtenir des particules matricielles. Il est cependant important, pour obtenir une amélioration de la résistance aux chocs thermiques, d'introduire des particules selon l'invention non broyées dans la charge de départ.

A l'étape C), les conditions de frittage, et en particulier la température de frittage, dépendent de la composition du mélange particulaire. Habituellement, une température de frittage comprise entre 1400°C et 1700°C, de préférence comprise entre 1500°C et 1600°C est bien adaptée.

A l'issue de l'étape C), on obtient un produit réfractaire fritté selon l'invention.

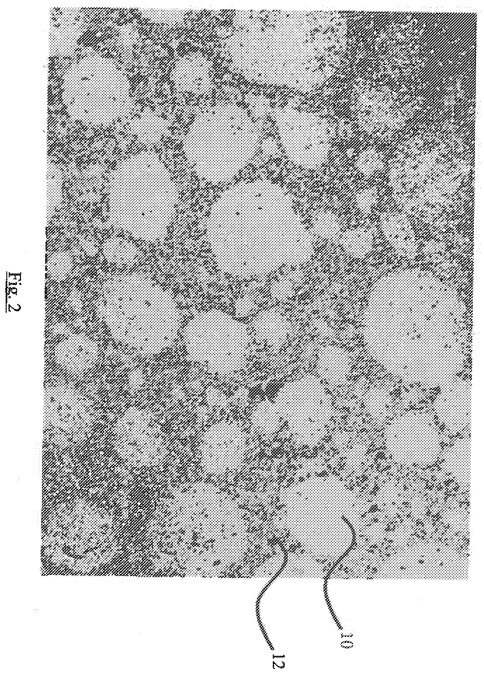

Un tel produit est représenté sur la figure 2. On distingue en particulier clairement les particules selon l'invention 10, sensiblement circulaires, et la matrice 12.

Le produit réfractaire fritté peut présenter une densité apparente supérieure à 3,00, supérieure à 3,10, supérieure à 3,30, supérieure à 3,50, et/ou inférieure à 4,30, ou inférieure à 4,20.

Il peut présenter une porosité ouverte supérieure à 10%, supérieure à 12%, supérieure à 14%, et/ou inférieure à 20%, inférieure à 18%, voire inférieure à 15%.

Les propriétés de ce produit le rendent particulièrement bien adapté à une utilisation dans un four de verrerie, un régénérateur, ou un canal de distribution de verre en fusion (« feeder » en anglais).

Un produit fritté selon l'invention peut être utilisé sous la forme de blocs ou d'une couche, par exemple sous la forme d'un garnissage appliqué, par tout procédé connu, sur une paroi à protéger. Le frittage peut être effectué *in situ*, c'est-à-dire après que le produit a été disposé dans sa position de service.

**Exemples**

Les exemples suivants sont fournis à des fins illustratives et ne limitent pas l'invention.

Les poudres selon l'invention des exemples ont été fabriquées selon le procédé suivant :
Les matières premières suivantes ont été utilisées :

- oxyde de chrome $Cr_2O_3$ pigmentaire d'une pureté supérieure à 95%, présentant une surface spécifique égale à $4m^2/g$ et une taille médiane de 0,7 $\mu$m ;
- alumine $Al_2O_3$ d'une pureté supérieure à 99%, présentant une surface spécifique égale à 7 $m^2/g$, et une taille médiane de 0,6$\mu$m ;
- fumée de silice, d'une pureté supérieure à 92% ;
- oxyde de titane, sous la forme rutile, d'une pureté supérieure à 93% et présentant une taille médiane de 1,5 $\mu$m.

Ces matières premières ont été dosées et mélangées de manière à présenter la composition chimique désirée.

Pour chaque exemple, 3000 g de mélange d'oxydes, 350 g d'eau et 150 g d'alcool polyvinylique (APV) sont introduits dans un malaxeur Eirich.RV02.

L'ensemble est ensuite malaxé pendant 1 minute, avec un tourbillon tournant à 300 tr/min et une cuve réglée à 43 tr/min afin d'obtenir un mélange homogène. La vitesse de rotation du tourbillon est ensuite augmentée jusqu'à 1050 tr/min, et une quantité supplémentaire de 900 grammes du mélange d'oxydes est alors progressivement ajoutée en une minute. La rotation est maintenue 2 minutes après la fin de l'introduction de la quantité supplémentaire de charge. Les particules sont ensuite déchargées, séchées sous air 24h à 110°C avant d'être frittées à 1550°C pendant un temps de palier de 3 heures, sous air, avec une vitesse de montée en température et une vitesse de descente en température de 50°C/h. Après frittage, les particules sont tamisées et la tranche granulométrique 0,5 - 5 mm est conservée.

Les grains des exemples comparatifs ont été fabriqués par extrusion des mêmes mélanges que ceux utilisés dans la fabrication des poudres selon l'invention de manière à obtenir des pains extrudés. Ces pains extrudés ont ensuite été frittés sous air dans un cycle thermique présentant un palier de 3 heures à 1550°C, et enfin broyés et tamisés pour obtenir la tranche granulométrique 0,5 - 5 mm.

Les résultats des mesures sont résumés dans le tableau 1 suivant, toutes les teneurs étant en pourcentage massique sur la base des oxydes :

| | G1* | G1 | G2* | G2 | G3 | G4 |
|---|---|---|---|---|---|---|
| | Grains de chamotte | Poudre selon l'invention | Grains de chamotte | Poudre selon l'invention | Poudre selon l'invention | Poudre selon l'invention |
| $Cr_2O_3$ | 44,2 | 43,6 | 87,3 | 87,3 | 57,2 | 57,5 |
| $Al_2O_3$ | 51,4 | 52,5 | 6,51 | 6,37 | 37,5 | 37,5 |
| $ZrO_2$ | 0,13 | 0,14 | 0,24 | 0,23 | 0,18 | 0,16 |
| $SiO_2$ | 1,67 | 1,57 | 3,73 | 3,78 | 2,35 | 2,38 |
| $MgO$ | 0,07 | 0,06 | 0,03 | 0,04 | 0,05 | 0,06 |
| $Fe_2O_3$ | 0,06 | 0,05 | 0,08 | 0,07 | 0,05 | 0,05 |
| $TiO_2$ | 1,7 | 1,5 | 1,91 | 1,91 | 1,93 | 1,89 |
| Autres | 0,77 | 0,58 | 0,2 | 0,3 | 0,74 | 0,46 |
| $Cr_2O_3$ + $Al_2O_3$ + $ZrO_2$ + $MgO$ + $Fe_2O_3$ + $SiO_2$ + $TiO_2$ | 99,23 | 99,42 | 99,8 | 99,8 | 99,26 | 99,54 |
| $Cr_2O_3$ + $Al_2O_3$ + $MgO$ | 95,67 | 96,16 | 93,84 | 93,71 | 94,75 | 95,06 |
| Densité apparente ($g/cm^3$) | 4,16 | 4,03 | 4,6 | 4,65 | 4.28 | 4,28 |
| Porosité ouverte (%) | 0,6 | 0,6 | 0,5 | 0,6 | 1,0 | 0,9 |
| Circularité médiane $Ci_{50}$ | 0,823 | 0,916 | 0,850 | 0,939 | 0,896 | 0,929 |
| Circularité $Ci_{10}$ | 0,654 | 0,728 | 0,701 | 0,742 | 0,760 | 0,825 |
| Convexité médiane $Co_{50}$ | 0,949 | 0,965 | 0,945 | 0,972 | 0,954 | 0,967 |
| Convexité $Co_{10}$ | 0,830 | 0,837 | 0,841 | 0,850 | 0,875 | 0,909 |
| * : hors invention Tableau 1 | | | | | | |

Des produits réfractaires frittés ont été fabriqués suivant des étapes A) à C) ci-dessus.

A l'étape A), la charge de départ a été préparée en mélangeant une quantité d'eau comprise entre 4,1% et 4,7% avec un mélange particulaire adapté à la composition chimique souhaitée. Dans les produits des exemples comparatifs 1*, 2* et 3*, les poudres selon l'invention ont été remplacées par des quantités identiques de grains de chamotte de même granulométrie et de même analyse chimique, mais ne présentant pas une circularité médiane supérieure à 0,87. Dans le produit de l'exemple comparatif 4*, les grains suivants ont été utilisés :

- Grains « AZS-Cr » du produit réfractaire électrofondu ER-2161 fabriqué par la Société Européenne des Produits Réfractaires, et contenant en pourcentage en masse sur la base des oxydes : 27% de $Cr_2O_3$, 27% de $ZrO_2$, 28% d'$Al_2O_3$, 14,5% de $SiO_2$ et 1,1% de $Na_2O$, de taille maximale inférieure à 5 mm ;
- Grains de chamotte « fort chrome » contenant 98% de $Cr_2O_3$ et présentant une porosité ouverte inférieure à 3%, de taille maximale inférieure à 5 mm.

3% d'un additif de mise en forme (ciment alumineux CA25 commercialisé par ALMATIS) ont été ajoutés dans la charge de départ.

Pour les exemples 1*, 2*, 3*, 1 à 6, la fraction matricielle représentait 37% en masse du mélange particulaire d'oxydes, et 35% en masse du mélange particulaire d'oxydes pour l'exemple 4* ; et contenait de l'oxyde de chrome pigmentaire, de l'alumine, de la zircone et de l'additif. La fraction matricielle ne contenait pas de particules selon l'invention (pour les exemples selon l'invention), ni de particules de chamotte ou de grains AZS-Cr (pour les exemples hors invention).

A l'étape B), la charge de départ a été mise en forme par une technique de vibrocoulage sous la forme d'une préforme aux dimensions adaptées à la mesure à effectuer.

A l'étape C), la préforme obtenue a ensuite été séchée puis frittée sous air à une température de 1550°C, pendant 10 heures.

Les mesures suivantes ont été réalisées :

Les mesures de la **densité apparente et de la porosité ouverte d'un ensemble** de particules ont été réalisées selon la méthode suivante :

- Sécher à 114°C pendant au moins 12 heures, 4 échantillons de 35 grammes constitués chacun de particules dont la taille est comprise entre 2 et 5 mm. La masse sèche de chacun des échantillons, est notée $Ps_1$, $Ps_2$, $Ps_3$ et $Ps_4$. On note $Ps = Ps_1+Ps_2+Ps_3+Ps_4$.
- Placer chaque échantillon dans un flacon.
- A l'aide d'une pompe à vide, faire un vide d'au moins 0,07 MPa dans chacun des flacons et maintenir ce vide pendant 7 minutes. Puis introduire de l'eau dans le flacon de façon à recouvrir les particules d'au moins 2 cm d'eau, ce qui permet aux particules d'être toujours recouvertes d'eau lors des mises sous vide suivantes.
- Refaire un vide de 0,08 MPa dans chaque flacon contenant les particules et l'eau, et maintenir ce vide pendant 7 minutes. Casser le vide.
- Refaire un vide de 0,08 MPa dans chaque flacon, et maintenir ce vide pendant 7 minutes. Casser le vide.
- Refaire un vide de 0,08 MPa dans chaque flacon, et maintenir ce vide pendant 7 minutes. Casser le vide.
- Déterminer le poids immergé de chaque échantillon, $Pi_1$, $Pi_2$, $Pi_3$ et $Fi_4$. On note $Pi = Pi_1+Pi_2+Pi_3+Pi_4$.
- Verser ensuite le contenu des 4 flacons sur un tamis de maille carrées de 2 mm afin d'éliminer l'eau. Verser ensuite les particules sur un tissu de coton sec afin d'éliminer l'excès d'eau et essuyer les particules jusqu'à ce que le lustre d'humidité ait disparu de leur surface.
- Déterminer le poids humide Ph de l'ensemble des particules.

La densité apparente de l'ensemble de particules est égale à Ps/(Ph-Pi).

La porosité ouverte de l'ensemble de particules est égale à (Ph-Ps)/(Ph-Pi).

Ces mesures sont toujours effectuées sur des ensembles de particules frittées. Elles correspondent à des mesures moyennes sur le matériau constituant les particules, c'est-à-dire ne tiennent pas compte des interstices entre les différentes particules.

Les mesures de **la densité apparente et** de la **porosité ouverte** d'un produit fritté ont été réalisées sur des échantillons de dimensions 125 x 25 x 25 $mm^3$, selon la norme ISO 5017.

Les **circularités $Ci_{50}$ et $Ci_{10}$ et les convexités $Co_{50}$ et $Co_{10}$ d'un ensemble de particules** peuvent être évaluées par la méthode suivante :

Un échantillon de particules présentant des tailles comprises entre 0,5 et 2 mm est versé sur la plaque de verre prévue à cet effet d'un appareil Morphologi® G3 commercialisé par la société Malvern. Le grossissement choisi est de 1x. L'analyse est lancée. Afin d'éviter la comptabilisation des éventuelles rayures de la plaque de verre et des poussières, les mesures correspondant à des particules présentant une largeur (« width ») inférieure à 0,4 mm sont éliminées du comptage par création d'un filtre (« width < 400 »). Le nombre de particules comptabilisées après filtrage est supérieur à 250.

L'appareil fournit une évaluation de la distribution des circularités (« Circularity ») et des convexités (« Convexity »), les particules étant comptabilisées en nombre.

Il est également possible d'estimer la distribution des circularités et des convexités des particules présentes dans un produit fritté par une analyse de clichés d'une coupe dudit produit, comme représenté sur la figure 2.

Les **analyses chimiques** ont été réalisées par fluorescence X en ce qui concerne les constituants dont la teneur est supérieure à 0,5%. La teneur des constituants présents en une teneur inférieure à 0,5% a été déterminée par AES-ICP (« Atomic Emission Spectoscopy-Inductively Coupled Plasma » en anglais).

Pour mesurer **la vitesse moyenne de corrosion,** des échantillons sous la forme de barreaux cylindriques présentant un rayon initial $r_o$ égal à 11 mm et de 100 mm de hauteur ont été prélevés et soumis à un test consistant à faire tourner les échantillons immergés dans un bain de verre C en fusion, porté à une température T de 1450°C. La vitesse de rotation des échantillons était de 6 tours par minute. Les échantillons ont été maintenus immergés pendant une durée $\Delta t$ de 120 heures. A la fin de cette période et après refroidissement, la partie d'un échantillon qui a trempé dans le verre (de hauteur H égale à 30 mm) présente une section sous la forme d'une ellipse de petit axe Pa et de grand axe Ga. Pour chaque échantillon, on détermine la valeur minimale de Pa (Pam) en mm, la valeur maximale de Pa (PaM) en mm, la valeur minimale de Ga (Gam) en mm et la valeur maximale de Ga (GaM) en mm. On fixe. $Pa_{moyen}$ = (Pam+PaM)/2 et $Ga_{moyen}$=(Garn+GaM)/2. Pour chaque échantillon le volume restant moyen $Vr_{moyen}$ est déterminé par la formule $Vr_{moyen}$=($\pi$ . H . $Pa_{moyen}$ . $Ga_{moyen}$)/4. Pour chaque échantillon, le volume corrodé moyen $Vc_{moyen}$ est ensuite déterminé par la formule $Vc_{moyen}$=[($\pi$. H. 22)/4] - $Vr_{moyen}$.

**La vitesse moyenne de corrosion** «Vu» d'un échantillon est déterminée par la formule

$$Vu = \frac{r_0 - \sqrt{r_0^2 - \left(\frac{Vc_{moyen}}{\pi\,H}\right)}}{\Delta t}.$$

Cette vitesse donne une évaluation de la résistance à la corrosion de l'échantillon testé. Ainsi, plus la vitesse de corrosion d'un échantillon sera faible, plus sa résistance à la corrosion par le verre en fusion sera élevée.

**L'indice de rugosité** Ir de l'échantillon i, $Ir_i$, est déterminé par la formule suivante :

$$Ir_i = [100.(Vc_{moyen}\ \text{échantillon référence})/(\ Vc_{moyen}\ \text{échantillon référence} - \Delta V\ \text{échantillon i})]\text{-}100,$$

dans laquelle $\Delta V$=($Vc_{moyen}$ - VcM).

L'essai normalisé PRE III,26/PRE/R,5,1/78 a été utilisé pour évaluer **la résistance aux chocs thermiques** par mesure de la perte relative de résistance à la flexion (% Perte MOR) après un ou plusieurs cycles thermiques. Chaque cycle thermique consiste à chauffer l'éprouvette d'essai de la température ambiante jusqu'à une température T de 800°C, à la maintenir à cette température T pendant 30 minutes, puis à la plonger dans de l'eau froide. Les éprouvettes sont des barreaux de 125 x 25 x 25 $mm^3$ ne comportant aucune face de peau.

La **résistance à la flexion** a été mesurée suivant la norme ISO 5014. Pour une composition donnée, la mesure de la résistance à la flexion initiale des éprouvettes (encore non soumises à un choc thermique), ou « MOR initial », est la valeur moyenne mesurée sur 3 éprouvettes identiques. La mesure de la résistance après choc thermique à 800°C, ou « MOR après CT », est la valeur moyenne de la résistance à la flexion mesurée à température ambiante sur les 3 éprouvettes après qu'elles ont subi ledit choc thermique. La mesure de la perte relative de résistance à la flexion, ou «% Perte MOR », est donnée par la formule suivante :

$$\% \text{ Perte MOR} = 100.(\text{MOR après CT} - \text{MOR initial}) / (\text{MOR initial})$$

Les échantillons 1*, 2*, 3* et 4* sont les échantillons de référence des échantillons 1, 2, 3 et 6, respectivement. L'échantillon 3* constitue l'échantillon de référence des échantillons 4 et 5.

Les tableaux 2 et 3 présentent les mélanges particulaires réalisés et les résultats obtenus.

Tableau 2

| | 1* | 1 | 2* | 2 | 3* | 3 | 4 | 5 |
|---|---|---|---|---|---|---|---|---|
| **Granulats** | | | | | | | | |
| Grains de chamotte G1*, 0,5 - 5 mm | 35 | - | 35 | | | | 1 | |
| Particules selon l'invention G1, 0,5 - 5 mm | - | **35** | - | **35** | | | | |
| Grains de chamotte G2*, 0,5 - 5 mm | - | - | 8,5 | - | - | | | |
| Particules selon l'invention G2*, 0,5 - 5 mm | - | - | - | **8,5** | - | **47** | | |
| Particules selon l'invention G3, 0,5 - 5 mm | | | | | | | **47,5** | - |
| Particules selon l'invention G4, 0,5 - 5 mm | | | | | | | - | **47,5** |
| **Produit obtenus après mise en forme et frittage du mélange particulaire (pourcentages massiques)** | | | | | | | | |
| $Cr_2O_3$ | 63,9 | **63,5** | 62,3 | **61,8** | 86,1 | **80,5** | **61,6** | **62,0** |

(suite)

| Produit obtenus après mise en forme et frittage du mélange particulaire (pourcentages massiques) | | | | | | | | |
|---|---|---|---|---|---|---|---|---|
| $Al_2O_3$ | 28,0 | **28,6** | 30,4 | **30,9** | 2,48 | **7,76** | 30,8 | 30,2 |
| $ZrO_2$ | 4,86 | **4,70** | 4,5 | **4,32** | 7,92 | **7,81** | 4,22 | 4,43 |
| $SiO_2$ | 1,32 | **1,34** | 1,15 | **1,18** | 1,02 | **1,23** | 1,23 | 1,31 |
| MgO | 0,04 | **0,05** | 0,04 | **0,05** | 0,05 | **0,05** | 0,05 | 0,05 |
| $Fe_2O_3$ | 0,12 | **0,13** | 0,09 | **0,13** | 0,09 | **0,14** | 0,18 | 0,15 |
| $TiO_2$ | 1,27 | **1,25** | 1,1 | **1,27** | 1,97 | **2,08** | 1,34 | 1,38 |
| Autres | 0,49 | **0,43** | 0,42 | **0,35** | 0,37 | **0,43** | 0,58 | 0,48 |
| $Cr_2O_3 + Al_2O_3 + ZrO_2 + MgO + Fe_2O_3 + SiO_2 + TiO_2$ | 99,51 | **99,57** | 99,58 | **99,65** | 99,63 | **99,57** | 99,42 | 99,52 |
| $Cr_2O_3 + Al_2O_3$ | 91,9 | **92,1** | 92,7 | **92,7** | 88,58 | **88,36** | 92,40 | 92,20 |
| Densité apparente du produit fritté ($g/cm^3$) | 3,75 | **3,83** | 3,77 | **3,80** | 4,00 | **4,10** | 3,79 | 3,81 |
| Porosité ouverte du produit fritté (%) | 17,2 | **16,4** | 16,9 | **15,3** | 18,0 | **14,1** | 16,2 | 15,5 |
| % Perte MOR avant/après chocs thermiques à 800°C (%) | 58 | **45** | 71 | **60** | 70 | **60** | 46 | 35 |
| Vitesse moyenne de corrosion Vu, en $\mu m/h$ - essai 1 | 8,4 | **7,2** | 8,4 | **6** | - | - | 7,1 | 6 |
| Vitesse moyenne de corrosion Vu, en $\mu m/h$- essai 2 | - | - | - | - | 7,6 | **7,2** | - | - |

Tableau 3

| Exemple | | 4* | 6 |
|---|---|---|---|
| **Mélange particulaire** | | | |
| % $Cr_T$ | | 61,8 | **62** |
| Matrice | Composition | $Cr_2O_3$ | **$Cr_2O_3$** |
| | | $Al_2O_3$ | **$Al_2O_3$** |
| | | Ciment | **Ciment** |
| | | - | **$ZrO_2$** |
| | Quantité de matrice (%) | 35 | **37** |
| | % $Cr_M$ | 67 | **68,8** |
| | Conditions respectées | (I), (V) et (VI) | **(I), (V) et (VI)** |
| | Diamètre médian ($\mu m$) | 1,9 | **2,2** |

(suite)

| Exemple | | 4* | | 6 |
|---|---|---|---|---|
| **Mélange particulaire** | | | | |
| Grains | Quantité de grains | 65 | | **63** |
| | Composition | AZS-Cr | fort chrome | **Particules selon l'invention G3, 0,5 - 5 nm** |
| | % $Cr_G$ | 27 | 98 | **58** |
| | Conditions respectées | (II) | | **(II), (III), (IV), (VII) et (VIII)** |
| | % de grains respectant lesdites conditions | (II) : 100% | | **(II) : 100%** <br> (III) : 100% <br> (IV) : 0% <br> (VII) : 100% <br> **(VIII) : 100%** |
| | Diamètre médian (mm) | 1,6 | | **2** |
| **Pièce frittée obtenue après frittage du mélange particulaire** | | | | |
| % $Cr_2O_3$ | | 61,8 | | **62** |
| % $Al_2O_3$ | | 16,5 | | **29,6** |
| % $ZrO_2$ | | 11,8 | | **4,43** |
| % $SiO_2$ | | 7,1 | | **1,28** |
| % $TiO_2$ | | 0,70 | | **1,38** |
| % CaO | | 0,90 | | **0,93** |
| % Autres éléments | | 1,2 | | **0,38** |
| Densité apparente (g/cm³) | | 3,65 | | **3,81** |
| Porosité ouverte (%) | | 14,5 | | **15,5** |
| % Perte MOR avant/après chocs thermiques à 800°C (%) | | 65 | | **48** |
| Vitesse moyenne de corrosion Vu, en $\mu$m/h - essai 3 | | 8,4 | | **6** |
| Indice de rugosité Ir - essai 3 | | 20 | | **3** |

Une comparaison de l'exemple comparatif 1* et de l'exemple 1, de l'exemple comparatif 2* et de l'exemple 2, de l'exemple comparatif 3* et de l'exemple 3, de l'exemple comparatif 4* et de l'exemple 6 montre l'impact positif de l'introduction de particules selon l'invention sur la résistance aux chocs thermiques.

Les inventeurs ont également mis en évidence une amélioration remarquable de la résistance à la corrosion par le verre en fusion pour les produits des exemples 1, 2, 3 et 6.

Les inventeurs ont également découvert l'influence de la circularité des poudres selon l'invention sur la résistance aux chocs thermiques, illustrée par les produits selon l'invention des exemples 4 et 5 : l'exemple 5, réalisé à partir de poudres selon l'invention présentant une circularité médiane élevée (0,909), présente une perte MOR avant/après choc thermique à 800°C plus faible que celle de l'exemple 4, réalisé à partir de poudres selon l'invention présentant une circularité plus faible (0,875).

Les inventeurs ont enfin mis en évidence une amélioration de l'indice de rugosité pour le produit selon l'exemple 6, un indice de rugosité inférieur à 15 étant est représentatif d'une usure régulière et uniforme.

Une comparaison des produits des exemples 4* et 6 montre que pour des teneurs totales en oxyde de chrome similaires, le produit selon l'exemple 6 présente, après essai de corrosion, un indice de rugosité plus de six fois inférieur à celui de l'exemple 4* ainsi qu'une résistance à la corrosion remarquable.

Comme cela apparaît clairement à présent, l'invention fournit une solution pour fabriquer des produits réfractaires frittés présentant une bonne résistance aux chocs thermiques et une résistance à la corrosion élevée.

**Revendications**

1. Poudre de particules, ladite poudre présentant une circularité médiane supérieure à 0,87 et au moins 90% en masse de particules présentant une taille supérieure à 100 $\mu$m, la poudre et au moins 80% en masse des particules présentant une composition chimique telle que, en pourcentage massique sur la base des oxydes et pour un total de 100% :

   - $Cr_2O_3$ + $Al_2O_3$ + $ZrO_2$ + MgO + $Fe_2O_3$ + $SiO_2$ + $TiO_2$ ≥ 90%, et
   - $Cr_2O_3$ + $Al_2O_3$ + MgO ≥ 60%, et
   - $Cr_2O_3$ ≥ 9%, et
   - 20% ≥ $SiO_2$ ≥ 0,5%, et
   - autres oxydes : ≤ 10%.

2. Poudre selon la revendication précédente, la composition de la poudre étant telle que $Cr_2O_3$ + $Al_2O_3$ + $ZrO_2$ + MgO + $Fe_2O_3$ + $SiO_2$ + $TiO_2$ ≥ 95%, et/ou
   $Cr_2O_3$ + $Al_2O_3$ + MgO > 65%, et/ou
   $SiO_2$ < 8%, et/ou
   4% > $TiO_2$ > 0,5% en pourcentage massique sur la base des oxydes.

3. Poudre selon l'une quelconque des revendications précédentes, présentant au moins 90% en masse de particules présentant une taille supérieure à 400 $\mu$m.

4. Poudre selon l'une quelconque des revendications précédentes, dont les particules sont frittées.

5. Poudre selon l'une quelconque des revendications précédentes, présentant une densité apparente supérieure à 85% de la densité théorique.

6. Poudre selon l'une quelconque des revendications précédentes, présentant une densité apparente supérieure à 3,0 g/cm$^3$.

7. Poudre selon l'une quelconque des revendications précédentes, présentant une circularité médiane supérieure à 0,88 et/ou une convexité médiane supérieure à 0,90.

8. Poudre selon l'une quelconque des revendications précédentes, présentant une composition chimique telle que, en pourcentage massique sur la base des oxydes et pour un total de 100%, suivant un premier mode de réalisation particulier :

   - $Cr_2O_3$ : 9% à 50% ;
   - $Al_2O_3$ : 45% à 88% ;
   - $SiO_2$ < 20% ;
   - $Fe_2O_3$ < 1% ;
   - MgO < 0,5% ;
   - 0,5% < $TiO_2$ < 4% ;
   - $ZrO_2$ < 5% ;
   - autres oxydes < 2% ;

   ou que, suivant un deuxième mode de réalisation particulier

   - $Cr_2O_3$ : 50% à 95% ;
   - $Al_2O_3$ : 2% à 45% ;
   - $SiO_2$ < 20% ;
   - $Fe_2O_3$ < 1% ;
   - MgO < 0,5% ;
   - 0,5% < $TiO_2$ < 4% ;
   - $ZrO_2$ < 5% ;
   - autres oxydes < 2% ;

   ou que, suivant un troisième mode de réalisation particulier

- $Cr_2O_3$ : 95% à 99% ;
- $Al_2O_3$ : 0 à 4% ;
- $SiO_2$ < 4% ;
- $Fe_2O_3$ < 4% ;
- MgO < 0,5% ;
- 0,5% < $TiO_2$ < 5% ;
- $ZrO_2$ < 5% ;
- autres oxydes < 2% ;

ou que, suivant un quatrième mode de réalisation particulier

- $Cr_2O_3$ : 15% à 50% ;
- $Al_2O_3$ : 10% à 80% ;
- 1% < $Fe_2O_3$ < 30%;
- 0,5% < MgO < 20% ;
- $SiO_2$ < 20% ;
- 0,5% < $TiO_2$ < 4% ;
- $ZrO_2$ < 5% ;
- autres oxydes < 2%.

9. Mélange particulaire comportant, en pourcentage sur la base du mélange particulaire,

- plus de 10% de particules présentant une taille inférieure ou égale à 50 $\mu$m, et
- plus de 15% d'une poudre selon l'une quelconque des revendications précédentes.

10. Mélange particulaire selon la revendication précédente, présentant une composition chimique telle que, en pourcentage massique sur la base des oxydes :

lorsque ladite poudre est conforme au premier mode de réalisation particulier de la revendication 8 :

- $Cr_2O_3$ + $Al_2O_3$ > 80% ;
- 10% < $Cr_2O_3$ < 50% ;
- $SiO_2$ < 20 ;
- $Fe_2O_3$ < 1% ;
- MgO < 0,5% ;
- 0,5% < $TiO_2$ < 4 ;
- $ZrO_2$ < 5% ;
- autres oxydes < 2% ;

lorsque ladite poudre est conforme au deuxième mode de réalisation particulier de la revendication 8 :

- $Cr_2O_3$ + $Al_2O_3$ > 80% ;
- 50% < $Cr_2O_3$ < 83%
- $SiO_2$ < 20% ;
- $Fe_2O_3$ < 1% ;
- MgO < 0,5% ;
- 0,5% < $TiO_2$ < 4% ;
- $ZrO_2$ < 5% ;
- autres oxydes < 2% ;

lorsque ladite poudre est conforme au troisième mode de réalisation particulier de la revendication 8 :

- 80% < $Cr_2O_3$ ;
- $SiO_2$ < 4% ;
- $Fe_2O_3$ < 1% ;
- MgO < 0,5% ;
- 0,5% < $TiO_2$ < 4% ;
- $ZrO_2$ < 5% ;

- autres oxydes < 2% ;

lorsque ladite poudre est conforme au quatrième mode de réalisation particulier de la revendication 8 :

- $Cr_2O_3 + Al_2O_3 > 55\%$
- $Cr_2O_3 < 50\%$;
- $SiO_2 < 20\%$ ;
- $1\% < Fe_2O_3 < 30\%$ ;
- $MgO < 20\%$ ;
- $0,5\% < TiO_2 < 4\%$ ;
- $ZrO_2 < 5\%$ ;
- autres oxydes < 2%.

11. Mélange particulaire selon l'une quelconque des revendications 9 et 10, présentant une teneur en oxyde de chrome, notée « $Cr_T$ », comprise entre 10% et 82%, en pourcentage massique sur la base des oxydes du mélange réfractaire, la fraction matricielle étant telle que

$$0,39.(Cr_T)+24 < Cr_M < 0,39.(Cr_T)+52 \qquad \textbf{(I)},$$

- $Cr_M$ désignant la teneur massique en oxyde de chrome de la fraction matricielle, en pourcentage en masse sur la base des oxydes de la fraction matricielle, et
le granulat étant tel que $x_{II} \geq 97\%$, $x_{III} \geq 70\%$, et $x_{IV} \leq x_{III}$ - 70%
- $Cr_G$ désignant la teneur massique en oxyde de chrome d'un grain, en pourcentage en masse sur la base des oxydes de ce grain,
- $x_{II}$ désignant la quantité, en pourcentage massique sur la base du granulat, de grains respectant la condition suivante **(II)** :

  – si 10 % $\leq Cr_T \leq$ 30 %, alors $Cr_G \leq 0,018.(Cr_T)^2 - 0,390.(Cr_T)+58,8$ ;

  – si 30 % $< Cr_T \leq$ 60 %, alors $Cr_G \leq 1,22.(Cr_T) + 26,7$ ; **(II)**

  – si 60 % $< Cr_T \leq$ 82 %, alors $Cr_G \leq 100$,

- $x_{III}$ désignant la quantité, en pourcentage massique sur la base du granulat, de grains respectant la condition suivante **(III)** :

  – si 10 % $\leq Cr_T \leq$ 30 %, alors

  $0,018.(Cr_T)^2-0,390.(Cr_T)+9,10 \leq Cr_G \leq 0,018.(Cr_T)^2-0,390.(Cr_T)+25,10$ ;

  – si 30 % $< Cr_T \leq$ 60 %, alors $1,17.(Cr_T)-21,5 \leq Cr_G \leq 1,17.(Cr_T)-5,5$ ; **(III)**

  – si 60 % $< Cr_T \leq$ 82 %, alors $1,17.(Cr_T)-21,5 \leq Cr_G \leq 1,67.(Cr_T)-35,5$,

- $x_{IV}$ désignant la quantité, en pourcentage massique sur la base du granulat, de grains respectant la condition suivante **(IV)** :

  – Si 10 % $\leq Cr_T \leq$ 30 %, alors $0,018.(Cr_T)^2-0,390.(Cr_T)+9,10 > Cr_G$ ;

  – Si 30 % $< Cr_T \leq$ 60 %, alors $1,17.(Cr_T)-21,5 > Cr_G$ ; **(IV)**

  – Si 60 % $< Cr_T \leq$ 82 %, alors $1,17.(Cr_T)-21,5 > Cr_G$.

12. Mélange particulaire selon la revendication précédente, dans lequel au moins 70% en masse des grains présentent, en pourcentage en masse sur la base des oxydes, une teneur en oxyde de chrome respectant la condition suivante **(VII)** :

- Si 10% ≤ $Cr_T$ ≤ 30%, alors 0,018.$(Cr_T)^2$-0,390.$(Cr_T)$+13,10 ≤ $Cr_G$ ≤ 0,018.$(Cr_T)^2$-0,390.$(Cr_T)$+21,10 ;
- Si 30% < $Cr_T$ ≤ 60%, alors 1,17.$(Cr_T)$-17,5 ≤ $Cr_G$ ≤ 1,17.$(Cr_T)$-9,5 ;
- Si 60% < $Cr_T$ ≤ 82%, alors 1,67.$(Cr_T)$-51,5 ≤ $Cr_G$ ≤ 1,67.$(Cr_T)$-39,5.

**13.** Mélange particulaire selon l'une quelconques des deux revendications immédiatement précédentes, dans lequel au moins 90% en masse des grains présentent une teneur en oxyde de chrome « $Cr_G$ » respectant la condition **(III)**

- Si 10% ≤ $Cr_T$ ≤ 30%, alors 0,018.$(Cr_T)^2$-0,390.$(Cr_T)$+9,10 ≤ $Cr_G$ ≤ 0,018.$(Cr_T)^2$-0,390.$(Cr_T)$+25,10 ;
- Si 30% < $Cr_T$ ≤ 60%, alors 1,17.$(Cr_T)$-21,5 ≤ $Cr_G$ ≤ 1,17.$(Cr_T)$-5,5 ;
- Si 60% < $Cr_T$ ≤ 82%, alors 1,17.$(Cr_T)$-21,5 ≤ $Cr_G$ ≤ 1,67.$(Cr_T)$-35,5 ;

et/ou la condition **(VII)**

- Si 10% ≤ $Cr_T$ ≤ 30%, alors 0,018.$(Cr_T)^2$-0,390.$(Cr_T)$+13,10 ≤ $Cr_G$ ≤ 0,018.$(Cr_T)^2$-0,390.$(Cr_T)$+21,10 ;
- Si 30% < $Cr_T$ ≤ 60%, alors 1,17.$(Cr_T)$-17,5 ≤ $Cr_G$ ≤ 1,17.$(Cr_T)$-9,5 ;
- Si 60% < $Cr_T$ ≤ 82%, alors 1,67.$(Cr_T)$-51,5 ≤ $Cr_G$ ≤ 1,67.$(Cr_T)$-39,5.

**14.** Produit fritté obtenu par frittage d'un mélange particulaire selon l'une quelconque des revendications 9 à 13.

**15.** Dispositif choisi parmi un réacteur, en particulier un réacteur de gazéificateur, un four de verrerie, un régénérateur, et un canal de distribution de verre, ledit dispositif comportant un bloc et/ou un revêtement en un produit fritté selon la revendication précédente.

**Patentansprüche**

**1.** Pulver aus Teilchen, wobei das besagte Pulver eine mittlere Rundheit von größer als 0,87 und mindestens 90 % in Masse an Teilchen aufweist, die eine Größe von größer als 100 $\mu$m aufweisen, wobei das Pulver und mindestens 80 % in Masse der Teilchen eine chemische Zusammensetzung aufweisen, so dass, in Massen-Prozentangabe auf Basis der Oxide und für eine Summe von 100 %:

- $Cr_2O_3$ + $Al_2O_3$ + $ZrO_2$ + MgO + $Fe_2O_3$ + $SiO_2$ + $TiO_2$ ≥ 90 %, und
- $Cr_2O_3$ + $Al_2O_3$ + MgO ≥ 60 %, und
- $Cr_2O_3$ ≥ 9 %, und
- 20 % ≥ $SiO_2$ ≥ 0,5 %, und
- andere Oxide: ≤ 10 %.

**2.** Pulver nach dem vorhergehenden Anspruch, wobei die Zusammensetzung des Pulvers so ist, dass $Cr_2O_3$ + $Al_2O_3$ + $ZrO_2$ + MgO + $Fe_2O_3$ + $SiO_2$ + $TiO_2$ ≥ 95 %, und/oder
$Cr_2O_3$ + $Al_2O_3$ + MgO ≥ 65 %, und/oder
$SiO_2$ < 8 %, und/oder
4 % > $TiO_2$ > 0,5 % in Massen-Prozentangabe auf Basis der Oxide.

**3.** Pulver nach irgendeinem der vorhergehenden Ansprüche, welches mindestens 90 % in Masse an Teilchen aufweist, welche eine Größe von größer als 400 $\mu$m aufweisen.

**4.** Pulver nach irgendeinem der vorhergehenden Ansprüche, dessen Teilchen gesintert sind.

**5.** Pulver nach irgendeinem der vorhergehenden Ansprüche, welches eine Schüttdichte von größer als 85 % der theoretischen Dichte aufweist.

**6.** Pulver nach irgendeinem der vorhergehenden Ansprüche, welches eine Schüttdichte von größer als 3,0 g/cm$^3$ aufweist.

**7.** Pulver nach irgendeinem der vorhergehenden Ansprüche, welches eine mittlere Rundheit von größer als 0,88 und/oder eine mittlere Konvexität von größer als 0,90 aufweist.

8. Pulver nach irgendeinem der vorhergehenden Ansprüche, welches eine chemische Zusammensetzung aufweist, so dass, in Massen-Prozentangabe auf Basis der Oxide und für eine Summe von 100 %, nach einer ersten bestimmten Ausführungsform:

- $Cr_2O_3$: 9 % bis 50 %;
- $Al_2O_3$: 45 % bis 88 %;
- $SiO_2$ < 20 %;
- $Fe_2O_3$ < 1 %;
- MgO < 0,5 %;
- 0,5 % < $TiO_2$ < 4 %;
- $ZrO_2$ < 5 %;
- andere Oxide < 2 %;

oder dass, nach einer zweiten bestimmten Ausführungsform

- $Cr_2O_3$: 50 % bis 95 %;
- $Al_2O_3$: 2 % bis 45 %;
- $SiO_2$ < 20 %;
- $Fe_2O_3$ < 1 %;
- MgO < 0,5 %;
- 0,5 % < $TiO_2$ < 4 %;
- $ZrO_2$ < 5 %;
- andere Oxide < 2 %;

oder dass, nach einer dritten bestimmten Ausführungsform

- $Cr_2O_3$: 95 % bis 99 %;
- $Al_2O_3$: 0 bis 4 %;
- $SiO_2$ < 4 %;
- $Fe_2O_3$ < 4 %;
- MgO < 0,5 %;
- 0,5 % < $TiO_2$ < 5 %;
- $ZrO_2$ < 5 %;
- andere Oxide < 2 %;

oder dass, nach einer vierten bestimmten Ausführungsform

- $Cr_2O_3$: 15 % bis 50 %;
- $Al_2O_3$: 10 % bis 80 %;
- 1 % < $Fe_2O_3$ < 30 %;
- 0,5 % < MgO < 20 %;
- $SiO_2$ < 20 %;
- 0,5 % < $TiO_2$ < 4 %;
- $ZrO_2$ < 5 %;
- andere Oxide < 2 %;

9. Teilchen-Mischung enthaltend, in Prozentangaben auf Basis der Teilchen-Mischung,

- mehr als 10 % an Teilchen, welche eine Größe von geringer als oder gleich 50 μm aufweisen, und
- mehr als 15 % eines Pulvers nach irgendeinem der vorhergehenden Ansprüche.

10. Teilchen-Mischung nach dem vorhergehenden Anspruch, welche eine chemische Zusammensetzung aufweist, so dass, in Massen-Prozentangabe auf Basis der Oxide:

wenn das besagte Pulver gemäß der ersten bestimmten Ausführungsform des Anspruchs 8 ist:

- $Cr_2O_3$ + $Al_2O_3$ > 80 %;
- 10 % < $Cr_2O_3$ < 50 %;

- $SiO_2 < 20$;
- $Fe_2O_3 < 1$ %;
- $MgO < 0,5$ %;
- $0,5$ % $< TiO_2 < 4$;
- $ZrO_2 < 5$ %;
- andere Oxide $< 2$ %;

wenn das besagte Pulver gemäß der zweite bestimmten Ausführungsform des Anspruchs 8 ist:

- $Cr_2O_3 + Al_2O_3 > 80$ %;
- $50$ % $< Cr_2O_3 < 83$ %
- $SiO_2 < 20$ %;
- $Fe_2O_3 < 1$ %;
- $MgO < 0,5$ %;
- $0,5$ % $< TiO_2 < 4$ %;
- $ZrO_2 < 5$ %;
- andere Oxide $< 2$ %;

wenn das besagte Pulver gemäß der dritten bestimmten Ausführungsform des Anspruchs 8 ist:

- $80$ % $< Cr_2O_3$;
- $SiO_2 < 4$ %;
- $Fe_2O_3 < 1$ %;
- $MgO < 0,5$ %;
- $0,5$ % $< TiO_2 < 4$ %;
- $ZrO_2 < 5$ %;
- andere Oxide $< 2$ %;

wenn das besagte Pulver gemäß der vierten bestimmten Ausführungsform des Anspruchs 8 ist:

- $Cr_2O_3 + Al_2O_3 > 55$ %
- $Cr_2O_3 < 50$ %;
- $SiO_2 < 20$ %;
- $1$ % $< Fe_2O_3 < 30$ %;
- $MgO < 20$ %;
- $0,5$ % $< TiO_2 < 4$ %;
- $ZrO_2 < 5$ %;
- andere Oxide $< 2$ %.

**11.** Teilchen-Mischung nach irgendeinem der Ansprüche 9 und 10, welche einen Gehalt an Chromoxid aufweist, notiert "$Cr_T$", zwischen 10 % und 82 %, in Massen-Prozentangabe auf Basis der Oxide der feuerfesten Mischung, wobei die Matrix-Fraktion so ist, dass

$$0,39.(Cr_T) + 24 < Cr_M < 0,39.(Cr_T) + 52 \qquad (I),$$

- wobei $Cr_M$ den Massen-Gehalt an Chromoxid der Matrix-Fraktion bezeichnet, in Prozentangabe in Masse auf Basis der Oxide der Matrix-Fraktion, und wobei das Granulat so ist, dass $x_{II} \geq 97$ %, $x_{III} \geq 70$ %, und $x_{IV} \leq x_{III} - 70$ %
- wobei $Cr_G$ den Massen-Gehalt an Chromoxid eines Korns bezeichnet, in Prozentangabe in Masse auf Basis der Oxide dieses Korns,
- wobei $x_{II}$ die Menge bezeichnet, in Massen-Prozentangabe auf Basis des Granulats, von Körnern, welche die folgende Bedingung **(II)** einhalten:

- wenn $10$ % $\leq Cr_T \leq 30$ %, dann $Cr_G \leq 0,018.(Cr_T)^2 - 0,390.(Cr_T) + 58,8$;

- wenn $30$ % $< Cr_T \leq 60$ %, dann $Cr_G \leq 1,22.(Cr_T) + 26,7$; \qquad **(II)**

- wenn $60$ % $< Cr_T \leq 82$ %, dann $Cr_G \leq 100$,

- wobei $x_{III}$ die Menge bezeichnet, in Massen-Prozentangabe auf Basis des Granulats, von Körnern, welche die folgende Bedingung **(III)** einhalten:

- wenn $10\,\% \leq CrT \leq 30\,\%$, dann

$$0{,}018.(Cr_T)^2 - 0{,}390.(Cr_T) + 9{,}10 \leq Cr_G \leq 0{,}018.(Cr_T)^2 - 0{,}390.(Cr_T) + 25{,}10\,;$$

- wenn $30\,\% < Cr_T \leq 60\,\%$, dann $1{,}17.(Cr_T) - 21.5 \leq Cr_G \leq 1{,}17.(Cr_T) - 5{,}5\,;$ **(III)**

- wenn $60\,\% < Cr_T \leq 82\,\%$, dann $1{,}17.(Cr_T) - 21.5 \leq Cr_G \leq 1{,}67.(Cr_T) - 35{,}5,$

- wobei $x_{IV}$ die Menge bezeichnet, in Massen-Prozentangabe auf Basis des Granulats, von Körnern, welche die folgende Bedingung **(IV)** einhalten:

- wenn $10\,\% \leq Cr_T \leq 30\,\%$, dann $0{,}018.(Cr_T)^2 - 0{,}390.(Cr_T) + 9{,}10 > Cr_G;$

- wenn $30\,\% < Cr_T \leq 60\,\%$, dann $1{,}17.(Cr_T) - 21.5 > Cr_G;$ **(IV)**

- wenn $60\,\% < Cr_T \leq 82\,\%$, dann $1{,}17.(Cr_T) - 21.5 > Cr_G.$

12. Teilchen-Mischung nach dem vorhergehenden Anspruch, wobei mindestens 70 % in Masse der Körner, in Massen-Prozentangabe auf Basis der Oxide, einen Gehalt an Chromoxid aufweisen, welcher die folgende Bedingung **(VII)** einhält:

- wenn $10\,\% \leq Cr_T \leq 30\,\%$, dann $0{,}018.(Cr_T)^2 - 0{,}390.(Cr_T) + 13{,}10 \leq Cr_G \leq 0{,}018.(Cr_T)^2 - 0{,}390.(Cr_T) + 21{,}10;$
- wenn $30\,\% < Cr_T \leq 60\,\%$, dann $1{,}17.(Cr_T) - 17.5 \leq Cr_G \leq 1{,}17.(Cr_T) - 9{,}5;$
- wenn $60\,\% < Crr \leq 82\,\%$, dann $1{,}67.(Cr_T) - 51.5 \leq Cr_G \leq 1{,}67.(Cr_T) - 39{,}5.$

13. Teilchen-Mischung nach irgendeinem der zwei unmittelbar vorhergehenden Ansprüche, wobei mindestens 90 % in Masse der Körner einen Gehalt an Chromoxid "$Cr_G$" aufweisen, welcher die Bedingung **(III)** einhält

- wenn $10\,\% \leq Cr_T \leq 30\,\%$, dann $0{,}018.(Cr_T)^2 - 0{,}390.(Cr_T) + 9{,}10 \leq Cr_G \leq 0{,}018.(Cr_T)^2 - 0{,}390.(Cr_T) + 25{,}10\,;$
- wenn $30\,\% < Cr_T \leq 60\,\%$, dann $1{,}17.(Cr_T) - 21.5 \leq Cr_G \leq 1{,}17.(Cr_T) - 5{,}5\,;$
- wenn $60\,\% < Cr_T \leq 82\,\%$, dann $1{,}17.(Cr_T) - 21.5 \leq Cr_G \leq 1{,}67.(Cr_T) - 35{,}5;$

und/oder die Bedingung **(VII)**

- wenn $10\,\% \leq CrT \leq 30\,\%$, dann $0{,}018.(Cr_T)^2 - 0{,}390.(Cr_T) + 13{,}10 \leq Cr_G \leq 0{,}018.(Cr_T)^2 - 0{,}390.(Cr_T) + 21{,}10;$
- wenn $30\,\% < Cr_T \leq 60\,\%$, dann $1{,}17.(Cr_T) - 17.5 \leq Cr_G \leq 1{,}17.(Cr_T) - 9{,}5;$
- wenn $60\,\% < Cr_T \leq 82\,\%$, dann $1{,}67.(Crr) - 51.5 \leq Cr_G \leq 1{,}67.(Crr) - 39{,}5.$

14. Gesintertes Produkt erhalten durch Sintern einer Teilchen-Mischung nach irgendeinem der Ansprüche 9 bis 13.

15. Vorrichtung ausgewählt aus einem Reaktor, insbesondere einem Vergaser-Reaktor, einem Glasofen, einem Regenerator, und einem Glas-Verteilerkanl, wobei die besagte Vorrichtung einen Block und/oder eine Verkleidung aus einem gesinterten Produkt nach dem vorhergehenden Anspruch enthält.

**Claims**

1. A powder of particles, said powder having a median circularity above 0.87 and at least 90 % by weight of particles larger than 100 $\mu$m, the powder and at least 80 % by weight of the particles having a chemical composition such that, in percentage by weight based on the oxides and for a total of 100%:

- $Cr_2O_3 + Al_2O_3 + ZrO_2 + MgO + Fe_2O_3 + SiO_2 + TiO_2 \geq 90\%$, and
- $Cr_2O_3 + Al_2O_3 + MgO \geq 60\%$, and
- $Cr_2O_3 \geq 9\%$, and
- $20\% \geq SiO_2 \geq 0.5\%$, and

- other oxides: $\leq$ 10%.

2. The powder as claimed in the preceding claim, the composition of the powder being such that $Cr_2O_3 + Al_2O_3 + ZrO_2 + MgO + Fe_2O_3 + SiO_2 + TiO_2 \geq 95\%$, and/or.
$Cr_2O_3 + Al_2O_3 + MgO > 65\%$, and/or
$SiO_2 < 8\%$, and/or
$4\% > TiO_2 > 0.5\%$ in percentage by weight based on the oxides.

3. The powder as claimed in any one of the preceding claims, having at least 90 % by weight of particles larger than 400 $\mu$m.

4. The powder as claimed in any one of the preceding claims, the particles of which are sintered.

5. The powder as claimed in any one of the preceding claims, having an apparent density greater than 85% of the theoretical density.

6. The powder as claimed in any one of the preceding claims, having an apparent density above 3.0 g/cm$^3$.

7. The powder as claimed in any one of the preceding claims, having a median circularity above 0.88 and/or a median convexity above 0.90.

8. The powder as claimed in any one of the preceding claims, having a chemical composition such that, in percentage by weight based on the oxides and for a total of 100%, according to a first particular embodiment:

   - $Cr_2O_3$: 9% to 50%;
   - $Al_2O_3$: 45% to 88%;
   - $SiO_2 < 20\%$;
   - $Fe_2O_3 < 1\%$;
   - MgO < 0.5%;
   - $0.5\% < TiO_2 < 4\%$;
   - $ZrO_2 < 5\%$;
   - other oxides < 2%;

   or in that, according to a second particular embodiment

   - $Cr_2O_3$: 50% to 95%;
   - $Al_2O_3$: 2% to 45%;
   - $SiO_2 < 20\%$;
   - $Fe_2O_3 < 1\%$;
   - MgO < 0.5%;
   - $0.5\% < TiO_2 < 4\%$;
   - $ZrO_2 < 5\%$;
   - other oxides < 2%;

   or in that, according to a third particular embodiment

   - $Cr_2O_3$: 95% to 99%;
   - $Al_2O_3$: 0 to 4%;
   - $SiO_2 < 4\%$;
   - $Fe_2O_3 < 4\%$;
   - MgO < 0.5%;
   - $0.5\% < TiO_2 < 5\%$;
   - $ZrO_2 < 5\%$;
   - other oxides < 2%;

   or in that, according to a fourth particular embodiment

   - $Cr_2O_3$: 15% to 50%;

- $Al_2O_3$: 10% to 80%;
- 1% < $Fe_2O_3$ < 30%;
- 0.5% < $MgO$ < 20%;
- $SiO_2$ < 20%;
- 0.5% < $TiO_2$ < 4%;
- $ZrO_2$ < 5%;
- other oxides < 2%.

9. A particulate mixture having, in percentage based on the particulate mixture,

   - more than 10% of particles with a size less than or equal to 50 $\mu$m, and
   - more than 15% of a powder as claimed in any one of the preceding claims.

10. The particulate mixture as claimed in any one of the three preceding claims, having a chemical composition such that, in percentage by weight based on the oxides:

    when said powder complies with the first particular embodiment of claim 8:

    - $Cr_2O_3$ + $Al_2O_3$ > 80%;
    - 10% < $Cr_2O_3$ < 50%;
    - $SiO_2$ < 20;
    - $Fe_2O_3$ < 1%;
    - $MgO$ < 0.5%;
    - 0.5% < $TiO_2$ < 4;
    - $ZrO_2$ < 5%;
    - other oxides < 2%;

    when said powder complies with the second particular embodiment of claim 8:

    - $Cr_2O_3$ + $Al_2O_3$ > 80%;
    - 50% < $Cr_2O_3$ < 83%;
    - $SiO_2$ < 20%;
    - $Fe_2O_3$ < 1%;
    - $MgO$ < 0.5%;
    - 0.5% < $TiO_2$ < 4%;
    - $ZrO_2$ < 5%;
    - other oxides < 2%;

    when said powder complies with the third particular embodiment of claim 8:

    - 80% < $Cr_2O_3$;
    - $SiO_2$ < 4%;
    - $Fe_2O_3$ < 1%;
    - $MgO$ < 0.5%;
    - 0.5% < $TiO_2$ < 4%;
    - $ZrO_2$ < 5%;
    - other oxides < 2%;

    when said powder complies with the fourth particular embodiment of claim 8:

    - $Cr_2O_3$ + $Al_2O_3$ > 55%;
    - $Cr_2O_3$ < 50%;
    - $SiO_2$ < 20%;
    - 1% < $Fe_2O_3$ < 30%;
    - $MgO$ < 20%;
    - 0.5% < $TiO_2$ < 4%;
    - $ZrO_2$ < 5%;
    - other oxides < 2%.

**11.** The particulate mixture as claimed in one of claims 9 and 10, having a content of chromium oxide, designated "$Cr_T$", between 10% and 82%, in percentage by weight based on the oxides of the refractory mixture, the matrix fraction being such that

$$0.39.(Cr_T)+24 < Cr_M < 0.39.(Cr_T)+52 \qquad \textbf{(I)},$$

- $Cr_M$ denoting the content by weight of chromium oxide in the matrix fraction, in percentage by weight based on the oxides of the matrix fraction, and

the granulate being such that $x_{II} \geq 97\%$, $x_{III} \geq 70\%$, and $x_{IV} \leq x_{III} - 70\%$,

- $Cr_G$ denoting the content by weight of chromium oxide in a grain, in percentage by weight based on the oxides of said grain,

- $x_{II}$ denoting the quantity, in percentage by weight based on the granulate, of grains fulfilling the following condition **(II)**:

- if $10\% \leq Cr_T \leq 30\%$, then $Cr_G \leq 0.018.(Cr_T)^2 - 0.390.(Cr_T)+58.8$;

- if $30\% < Cr_T \leq 60\%$, then $Cr_G \leq 1.22.(Cr_T) + 26.7$; **(II)**

- if $60\% < Cr_T \leq 82\%$, then $Cr_G \leq 100$,

- $x_{III}$ denoting the quantity, in percentage by weight based on the granulate, of grains fulfilling the following condition **(III)**:

- if $10\% \leq Cr_T \leq 30\%$, then

$0.018.(Cr_T)^2-0.390.(Cr_T)+9.10 \leq Cr_G \leq 0.018.(Cr_T)^2-0.390.(Cr_T)+25.10$;

- if $30\% < Cr_T \leq 60\%$, then $1.17.(Cr_T)-21.5 \leq Cr_G \leq 1.17.(Cr_T)-5.5$; **(III)**

- if $60\% < Cr_T \leq 82\%$, then $1.17.(Cr_T)-21.5 \leq Cr_G \leq 1.67.(Cr_T)-35.5$,

- $x_{IV}$ denoting the quantity, in percentage by weight based on the granulate, of grains fulfilling the following condition **(IV)**:

- If $10\% \leq Cr_T \leq 30\%$, then $0.018.(Cr_T)^2-0.390.(Cr_T)+9.10 > Cr_G$;

- If $30\% < Cr_T \leq 60\%$, then $1.17.(Cr_T)-21.5 > Cr_G$; **(IV)**

- If $60\% < Cr_T \leq 82\%$, then $1.17.(Cr_T)-21.5 > Cr_G$.

**12.** The particulate mixture as claimed in the preceding claim, in which at least 70 % by weight of the grains have, in percentage by weight based on the oxides, a content of chromium oxide fulfilling the following condition **(VII)**:

- If $10\% \leq Cr_T \leq 30\%$, then $0.018.(Cr_T)^2-0.390.(Cr_T)+13.10 \leq Cr_G \leq 0.018.(Cr_T)^2-0.390.(Cr_T)+21.10$;
- If $30\% < Cr_T \leq 60\%$, then $1.17.(Cr_T)-17.5 \leq Cr_G \leq 1.17.(Cr_T)-9.5$;
- If $60\% < Cr_T \leq 82\%$, then $1.67.(Cr_T)-51.5 \leq Cr_G \leq 1.67.(Cr_T)-39.5$.

**13.** The particulate mixture as claimed in any one of the two immediately preceding claims, in which at least 90 % by weight of the grains have a content of chromium oxide "$Cr_G$" fulfilling condition **(III)**

- If $10\% \leq Cr_T \leq 30\%$, then $0.018.(Cr_T)^2-0.390.(Cr_T)+9.10 \leq Cr_G \leq 0.018.(Cr_T)^2-0.390.(Cr_T)+25.10$;
- If $30\% < Cr_T \leq 60\%$, then $1.17.(Cr_T)-21.5 \leq Cr_G \leq 1.17.(Cr_T)-5.5$;
- If $60\% < Cr_T \leq 82\%$, then $1.17.(Cr_T)-21.5 \leq Cr_G \leq 1.67.(Cr_T)-35.5$;

and/or condition **(VII)**

- If $10\% \leq Cr_T \leq 30\%$, then

$0.018.(Cr_T)^2-0.390.(Cr_T)+13.10 \leq Cr_G \leq 0.018.(Cr_T)^2-0.390.(Cr_T)+21.10$;
- If $30\% < Cr_T \leq 60\%$, then $1.17.(Cr_T)-17.5 \leq Cr_G \leq 1.17.(Cr_T)-9.5$;
- If $60\% < Cr_T \leq 82\%$, then $1.67.(Cr_T)-51.5 \leq Cr_G \leq 1.67.(Cr_T)-39.5$.

14. A sintered product obtained by sintering a particulate mixture as claimed in any one of claims 9 to 13.

15. A device selected from a reactor, in particular a gasifier reactor, a glass furnace, a regenerator, and a glass distributing channel, said device comprising a block and/or a lining of a sintered product as claimed in the preceding claim.

Fig. 1a

Fig. 1b

_Fig. 2_

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6352951 B
- US 4823359 A
- US 4544643 A
- US 4158569 A
- US 4039344 A

**Littérature non-brevet citée dans la description**

- **Z.-Q. GUO et al.** *Ceramic International,* 1997, vol. 23, 489-496
- **C.A. JOUENNE.** Traité de céramiques et matériaux minéraux. 1984, 403-405